# EUROPEAN PATENT SPECIFICATION

(11) **EP 2 925 768 B1**
(45) Date of publication and mention of the grant of the patent: **21.12.2016**
(21) Application number: 13789179.2
(22) Date of filing: 04.11.2013
(51) Int. Cl.: C07F 15/06

(54) **COBALTCOMPLEX SALTS**
KOBALTKOMPLEXSALZE
SELS DE COMPLEXE DE COBALT

(30) Priority: 30.11.2012 EP 12008062
(43) Date of publication of application: 07.10.2015
(73) Proprietor: Merck Patent GmbH, 64293 Darmstadt (DE)
(72) Inventor: IGNATYEV, Nikolai (Mykola), 47058 Duisburg (DE); SCHULTE, Michael, 65474 Bischofsheim (DE); KAWATA, Kentaro, Kasukabe, Saitama 344-0048 (JP); BERNHARDT, Eduard, 42277 Wuppertal (DE); BERNHARDT-PITCHOUGINA, Vera, 42277 Wuppertal (DE); WILLNER, Helge, 45481 Muehlheim/Ruhr (DE)
(86) International application number: PCT/EP2013/003308
(87) International publication number: WO 2014/082704

(56) References cited:
- MOSCONI, EDOARDO ET AL: "Cobalt Electrolyte/Dye Interactions in Dye-Sensitized Solar Cells: A Combined Computational and Experimental Study", JOURNAL OF THE AMERICAN CHEMICAL SOCIETY , 134(47), 19438-19453 CODEN: JACSAT; ISSN: 0002-7863, 2012, XP002717670, DOI: 10.1021/JA3079016

## Description

### Field of the Invention

The present invention relates to Cobaltcomplex salts according to formula (I) as described below and their use as redox active species or dopant for hole transport materials in electrochemical and/or optoelectronic devices. The present invention relates additionally to electrochemical and/or optoelectronic devices comprising said salts and electrolyte formulations comprising said salts.

### Background of the Invention

Dye-sensitized solar cells (DSSC) are considered to be a promising alternative to cost-intensive silicon based photovoltaic devices. The working principle of a dye-sensitized solar cell is similar to that which Nature use in the leaves of the plants to convert carbon dioxide and water into carbohydrates and oxygen under sunlight. Chlorophyll in the leaves sensitize this process in the Nature. The first artificial sensitized solar cell was fabricated by covering titanium dioxide crystals with a layer of Chlorophyll.

Modern dye-sensitized solar cells are multicomponent systems which consist of semiconductor anode (an oxide, typically TiO₂, anatase), dyesensitizer, counter-electrode (cathode) and electrolyte which contains a redox active species, solvent and some additives. The photoanode is constituted by a monolayer of a molecular redox dye sensitizer adsorbed onto a layer of nanocrystalline semiconductor nanoparticles. After light absorption, an excited state of the photosensitizer readily inject an electron into the conduction band of the semiconductor. The electron back transfer from the conduction band to dye cations is named interfacial charge recombination. This interfacial charge recombination competes kinetically with the reaction of the redox active species with the oxidized sensitizer. The redox active species becomes oxidized and the sensitizer becomes reduced and ready to be able to absorb light again. The reduction of the redox active species takes place in the charge transport layer, e.g. by the electrolyte formulation. The redox active species is often called mediator or redox shuttle and build a so-called redox couple. Charge transport by the electrolyte in the pores of the semiconductor film to the counter electrode and that of injected electrons within the nanocrystalline film to the back contact should be fast enough to compete efficiently with the electron recapture reaction [H. Nusbaumer et al, J. Phys. Chem. B2001, 105, 10461-10464]. In spite of DSSCs already achieved solar-to-electric power-conversion efficiency (PCE, η) of more than 11 % (under standard air mass 1.5 and solar light intensity 1000 W/m² at 298 K), they are still a factor of 2 below that of Si-solar cells [J.-H. Yum, E. Baranoff, F. Kessler, T. Moehl, S. Ahmad, T. Bessho, A. Marchioro, E. Ghadiri, J.-E. Moser, C. Yi, Md. K. Nazeeruddin and M. Grätzel, Nature Communications, 3 (2012), p. 631]. For further improvement of the PCE the optimization of all components of DSSC and in particular of redox mediators are required. Electrolytes containing the I⁻/I₃⁻ redox system are commonly used in DSSC as the redox active species or mediator. However the I⁻/I₃⁻ redox couple suffers from a low redox potential which limits the open-circuit potential to 0.7-0.8 V of this type of DSSC. [H.N. Tsao, C. Yi, T. Moehl, J.-H. Yum, S.M. Zakeeruddin, M.K. Nazeeruddin and M. Grätzel, ChemSusChem, 4 (2011), p. 591 - 594.] Iodide-containing electrolytes also corrode current collectors in DSSC made from Ag or Cu. Therefore, the development of non-corrosive electrolytes with redox active species which better correspond to the oxidation potential of the dye is required.

Recently, several publications devoted to the use of cobalt redox shuttles, e.g. cobalt (III/II) tris(2,2'-bipyridine), in electrolyte formulations for DSSC or within the charge-transfer layer of solid state DSSC (sDSSC).

It is known that the oxidation of Co(II)-complexes and the reduction of Co(III)-complexes depend on the counter-anion and on the nature of the ligands coordinated on the metal centre. A variety of ligands to stabilize the oxidation state of Co(II) and Co(III) have been developed and studied [N.N. Greenwood, A. Earnshaw, Chemistry of the Elements, Band 2, Part 26. Cobalt, Rhodium, Iridium, 1997, Elsevier Science Ltd.]. Co(II)/(III)-complexes are known with variety of anions, for instance with [PF₆]⁻ [WO 2012/001033; H.-S. Kim, S.-B. Ko, I.-H. Jang and N.-G. Park, Chem. Commun., 47 (2011), p. 12637-12639; J.-H. Yum, E. Baranoff, F. Kessler, T. Moehl, S. Ahmad, T. Bessho, A. Marchioro, E. Ghadiri, J.-E. Moser, C. Yi, Md. K. Nazeeruddin and M. Grätzel, Nature Communications, 3 (2012), p. 631], [(CF₃SO₂)₂N]⁻ [P. Nockemann, M. Pellens, K.V. Hecke, L.V. Meervelt, J. Wouters, B. Thijs, E. Vanecht, T.N. Parac-Vogt, N. Mehdi, S. Schaltin, J. Fransaer, S. Zahn, B. Kirchner and K. Binnemans, Chem. Eur. J., 16 (2010), p. 1849-1858] and [B(CN)₄]⁻ [WO 2012/114315; A. Yella, H.-W. Lee, H.N. Tsao, C. Yi, A.K. Chadrian, Md.K. Nazeeruddin, E.W.-G. Diau, C.-Y. Yeh, S.M. Zakeeruddin, M. Grätzel, Science, 334 (2011), p. 629 - 634; H.N. Tsao, J. Burschka, C.Yi, F. Kessler, M.K. Nazeeruddin and M. Grätzel, Energy Environ. Sci., 4 (2011), p. 4921 - 4924; H.N. Tsao, C.Yi, T. Moehl, J.-H. Yum, S.M. Zakeeruddin, M.K. Nazeeruddin and M. Grätzel, ChemSusChem, 4 (2011), p. 591 - 594].

Cobalt complexes used as redox species in solar cell fabrication are disclosed in Journal of American Chemical Society 2012,134 (47), 19438-19453.

However, there continues to be a demand for new and/or improved redox shuttles for electrochemical and optoelectronic devices.

The objective of the invention is therefore to provide an alternative and/or improved redox couple for electrochemical and optoelectronic devices.

### Present Invention

Surprisingly, it was found that replacement of tetracyanoborate-anion in Co(III/II) complexes with less symmetrical anions containing a reduced number of cyano-groups results in new Co(II)/(III)-complexes which provide better performance of DSSC.

The present invention therefore relates firstly to compounds of formula (I) 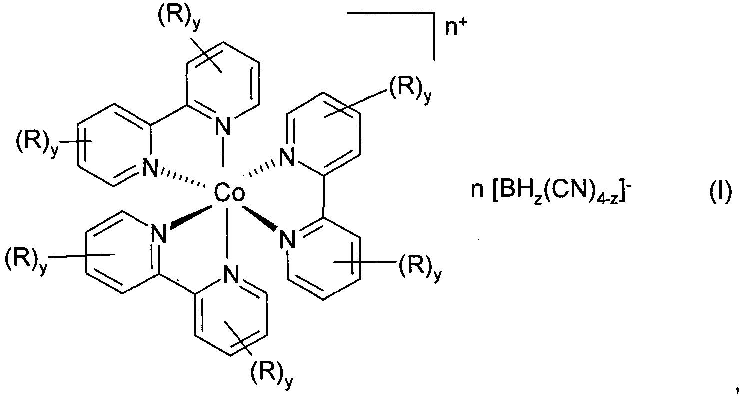 in which
z is 1 or 2,
n is 2 or 3,
y is each independently 0, 1, 2, 3 or 4,
R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
   wherein two or more adjacent CH₂-groups within the substituent (CH₂)ₘ-COOR' can optionally be replaced with (-CH=CH-),
m is a number from 0 to 20 and
R' is H or a straight-chain or branched alkyl group with 1 to 20 C atoms, a straight-chain or branched alkenyl group with 2 to 20 C atoms or a straight-chain or branched alkynyl group with 2 to 20 C atoms.

Compounds of formula (I) are defined in such a way that the given formula comprises all possible stereoisomeric forms.

A straight-chain or branched alkyl group having 1 to 20 C atoms is, for example, methyl, ethyl, propyl, isopropyl, *n*-butyl, sec.-butyl, *tert*.-butyl, 1-(2,2-dimethyl)-propyl, pentyl, hexyl, heptyl, octyl, x-methylbutyl with x being 1; 2 or 3, x-methylpentyl with x being 1; 2; 3 or 4, x-methylhexyl with x being 1; 2; 3; 4 or 5, x-ethylpentyl with x being 1, 2 or 3, x-ethylhexyl with x being 1; 2; 3 or 4, *n*-nonyl, *n*-decyl, *n*-undecyl, *n*-dodecyl, *n*-tridecyl, *n*-tetradecyl, *n*-pentadecyl, *n*-hexadecyl, *n*-heptadecyl, *n*-octadecyl, *n*-nonadecyl and *n-*eicosyl. Preferably, the straight-chain or branched alkyl group has 1 to 10 C atoms. Particularly preferably, the straight-chain or branched alkyl group is methyl, ethyl, isopropyl, *n*-butyl, sec.-butyl or *tert*.-butyl. Very particularly preferably, the straight-chain or branched alkyl group is methyl or *tert*.-butyl.

A straight-chain or branched alkenyl having 2 to 20 C atoms, in which a plurality of double bonds may also be present, is, for example, allyl, 2- or 3-butenyl, *iso*-butenyl, sec-butenyl, furthermore 4-pentenyl, *iso*-pentenyl, hexenyl, heptenyl, octenyl, -C₉H₁₇, -C₁₀H₁₉ to -C₂₀H₃₉, preferably allyl, 2- or 3-butenyl, *iso*-butenyl, sec-butenyl, furthermore preferably 4-pentenyl, iso-pentenyl or hexenyl.

A straight-chain or branched alkynyl having 2 to 20 C atoms, in which a plurality of triple bonds may also be present, is, for example, ethynyl, 1- or 2-propynyl, 2- or 3-butynyl, furthermore 4-pentynyl, 3-pentynyl, hexynyl, hept-ynyl, octynyl, -C₉H₁₅, -C₁₀H₁₇ to -C₂₀H₃₇, preferably ethynyl, 1- or 2-propynyl, 2- or 3-butynyl, 4-pentynyl, 3-pentynyl or hexynyl.

Halogen denotes F, Cl, Br or I. Halogen preferably denotes F.

The substituent (CH₂)ₘ-COOR' in which m is 0 to 20 thus reads -COOR', -(CH₂)-COOR', -(CH₂)₂-COOR', -(CH₂)₃-COOR', -(CH₂)₄-COOR', -(CH₂)₅-COOR', -(CH₂)₆-COOR', -(CH₂)₇-COOR', -(CH₂)₈-COOR', -(CH₂)₉-COOR', -(CH₂)₁₀-COOR', -(CH₂)₁₁-COOR', -(CH₂)₁₂-COOR', -(CH₂)₁₃-COOR', -(CH₂)₁₄-COOR', -(CH₂)₁₅-COOR', -(CH₂)₁₇-COOR' or -(CH₂)₁₉-COOR', wherein R' has a meaning as described before or preferably described. In (CH₂)ₘ-COOR', m is preferably 0, 1, 15 and 17. In the substituent (CH₂)ₘ-COOR' two or more adjacent CH₂-groups can be replaced with (-CH=CH-), for example -(CH₂)₈-CH=CH-(CH₂)₇-COOR', -(CH₂)₅-CH=CH-CH₂-CH=CH-(CH₂)₇-COOR' or -CH₂-(CH₂-CH=CH)₃-(CH₂)₇-COOR'.

R' is H or a straight-chain or branched alkyl group with 1 to 20 C atoms, a straight-chain or branched alkenyl group with 2 to 20 C atoms or a straight-chain or branched alkynyl group with 2 to 20 C atoms. Preferably, R' is H or a straight-chain or branched alkyl group with 1 to 10 C atoms. Particularly preferably, R' is H for compounds of formula (I) in which n is 2 (compounds of formula (Ia) as defined below). Particularly preferably, R' is a straight-chain or branched alkyl group with 1 to 10 C atoms for compounds of formula (I) in which n is 3 (compounds of formula (Ib) as defined below).

Compounds of formula (I) having anions of the formula [BH_{z}(CN)_{4-z}]⁻ in which z is 1 or 2 correspond therefore to
compounds of formula (IA) in which z is 1 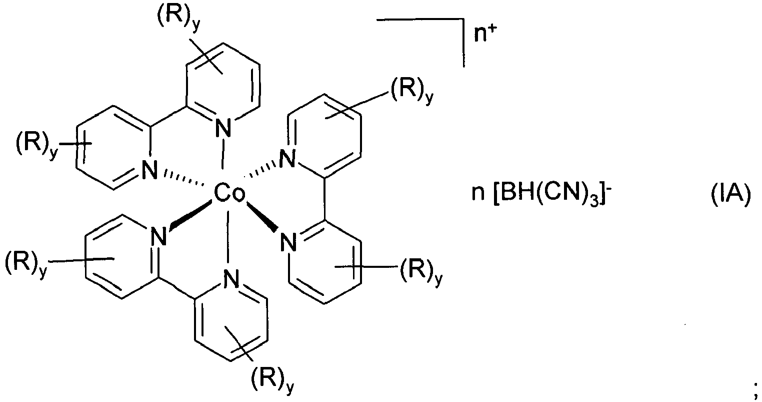 and compounds of formula (IB) in which z is 2 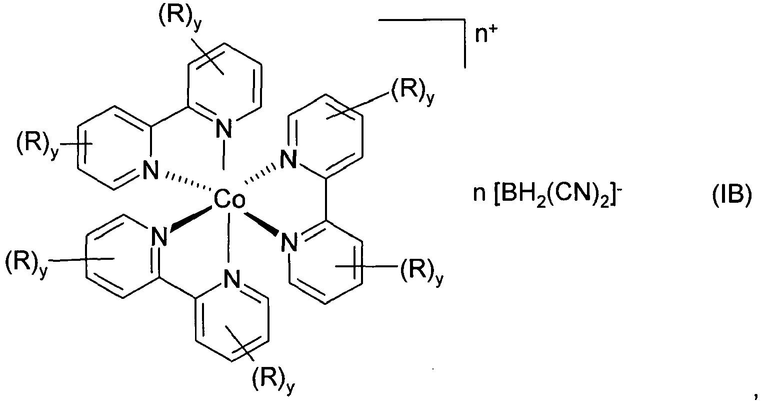 wherein R, R', y, m and n have a meaning as described above or below.

Compounds of formula (IA) and (IB) are defined in such a way that the given formulae comprise all possible stereoisomeric forms.

The invention furthermore relates to the use of at least one compound of formula (I), (IA) or (IB) as redox active species.

Therefore, the term "Co^{II}/Co^{III}-redox couple of formula (I)" is defined as the mixture of the compound of formula (I) in which n is 2 with the compound of formula (I) in which n is 3 and the substituents z, R, R', y, m and n are identical or different.

The Co^{II}/Co^{III}-redox couple of formula (I) is therefore the mixture of the compound of formula (Ia) with a compound of formula (Ib), 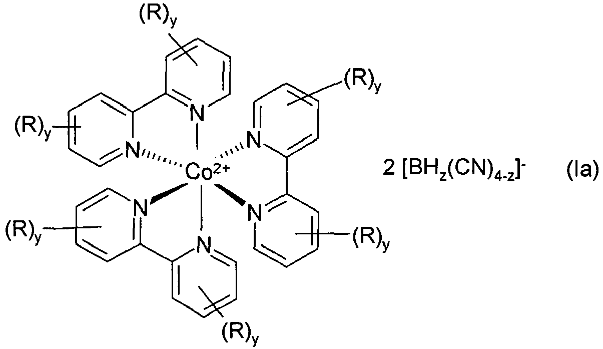 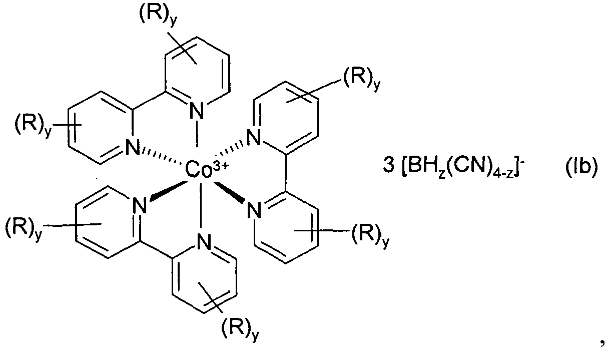 in which
the substituents z, R, R', y and m are identical or different and are defined as:
   z is 1 or 2,
   y is each independently 0, 1, 2, 3 or 4,
   R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
      wherein two or more adjacent CH₂-groups within the substituent (CH₂)ₘ-COOR' can optionally be replaced with (-CH=CH-),
   m is a number from 0 to 20 and
   R' is H or a straight-chain or branched alkyl group with 1 to 20 C atoms, a straight-chain or branched alkenyl group with 2 to 20 C atoms or a straight-chain or branched alkynyl group with 2 to 20 C atoms.

Compounds of formula (Ia) and (Ib) are defined in such a way that the given formulae comprise all possible stereoisomeric forms.

In one embodiment of the invention, it is preferred that the variable z in the Co^{II}/Co^{III}-redox couple of formula (I) or with other words in the compounds of formula (Ia) and (Ib) is identical thus forming Co^{II}/Co^{III}-redox couples of formula (IA) or Co^{II}/Co^{III}-redox couples of formula (IB).

A Co^{II}/Co^{III}-redox couple of formula (IA) is the Co^{II}/Co^{III}-redox couple of formula (I) in which z is 1 thus building the anion [BH(CN)₃]⁻ in formula (Ia) and (Ib), wherein the substituents R, R', y and m are identical or different and are defined as described above.

A Co^{II}/Co^{III}-redox couple of formula (IB) is the Co^{II}/Co^{III}-redox couple of formula (I) in which z is 2 thus building the anion [BH₂(CN)₂]⁻ in formula (Ia) and (Ib), wherein the substituents R, R', y and m are identical or different and are defined as described above.

In one embodiment of the invention, preferred compounds of formula (I), as described above, are compounds in which z is 1 corresponding to compounds of formula (IA), wherein R, R', y, m and n have a meaning as described above or below.
In one embodiment of the invention, preferred Co^{II}/Co^{III}-redox couples of formula (I) are therefore Co^{II}/Co^{III}-redox couples of formula (IA), wherein R, R', y and m have a meaning as described above or below.

In another embodiment of the invention, preferred compounds of formula (I), as described above, are compounds in which z is 2 corresponding to compounds of formula (IB), wherein R, R', y, m and n have a meaning as described above or below.

In one embodiment of the invention, preferred Co^{II}/Co^{III}-redox couples of formula (I) are therefore Co^{II}/Co^{III}-redox couples of formula (IB), wherein R, R', y and m have a meaning as described above or below.

Compounds of formula (IA), wherein R, R', y, m and n have a meaning as described above or below, are particularly preferred compounds of formula (I).

Co^{II}/Co^{III}-redox couples of formula (IA), wherein R, R', y and m have a meaning as described above or below, are particularly preferred Co^{II}/Co^{III}-redox couples of formula (I).

R in compounds of formula (I), (IA) and (IB) or in Co^{II}/Co^{III}-redox couples of formula (I), (IA) and (IB) each independently denotes preferably a straight-chain or branched alkyl group with 1 to 20 C atoms, OR' or (CH₂)ₘ-COOR', wherein m and R' or the alkyl group have a meaning as described before or preferably described before.

R in compounds of formula (I), (IA) and (IB) each independently denotes preferably a straight-chain or branched alkyl group with 1 to 20 C atoms or (CH₂)ₘ-COOR', when n is 2 and wherein (CH₂)ₘ-COOR', m and R' or the alkyl group have a meaning as described before or preferably described before.

R in compounds of formula (I), (IA) and (IB) each independently denotes preferably a straight-chain or branched alkyl group with 1 to 20 C atoms, OR' or (CH₂)ₘ-COOR', when n is 3 and wherein (CH₂)ₘ-COOR', m and R' or the alkyl group have a meaning as described before or preferably described before.

R in compounds of formula (I), (IA) and (IB) each independently denotes particularly preferably a straight-chain or branched alkyl group with 1 to 20 C atoms wherein the alkyl group have a meaning as described before or preferably described before.

Compounds of formula (I), (IA) and (IB) are preferred in which y is 0 or 1. In case y is 1, each substituent R is independently preferably in meta- or para-position to the N-atom of the pyridine ring. In case y is 1, each substituent R is particulary preferably in para-position to the N-atom of the pyridine ring. Co^{II}/Co^{III}-redox couples of formula (I), (IA) and (IB) are therefore preferred in which y is 0 or 1. In case y is 1, each substituent R is independently preferably in meta- or para-position to the N-atom of the pyridine ring. In case y is 1, each substituent R is particulary preferably in para-position to the N-atom of the pyridine ring.

Compounds of formula (I), (IA) and (IB) are particularly preferred in which y is 0.
Co^{II}/Co^{III}-redox couples of formula (I), (IA) and (IB) are therefore particularly preferred in which y is 0.

Examples of compounds of formula (I) are the following compounds:

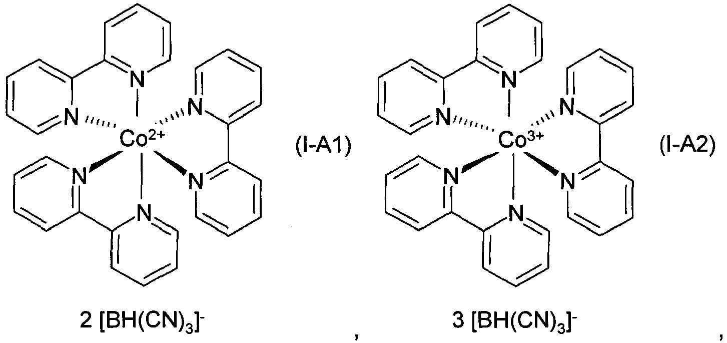

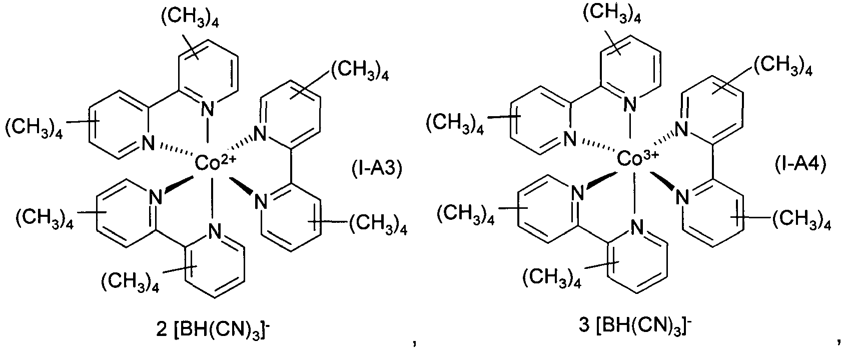

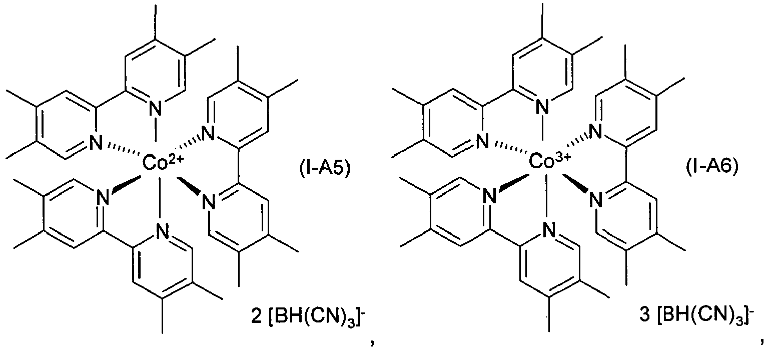

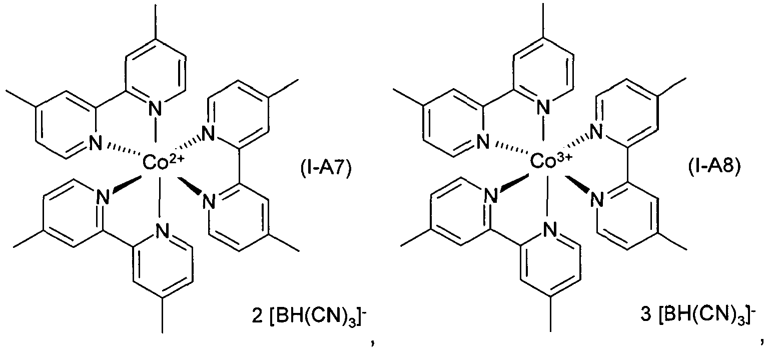

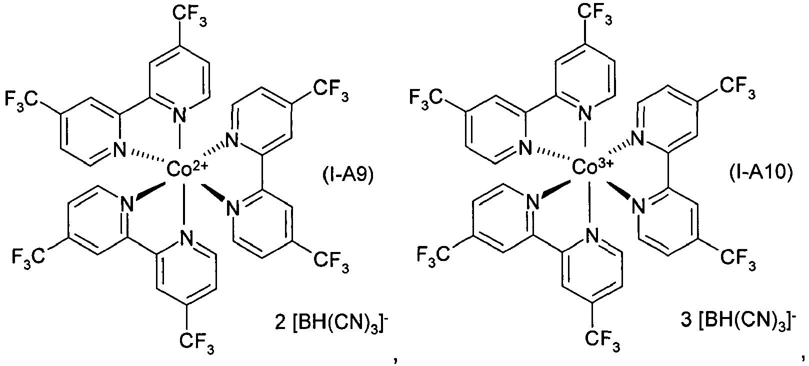

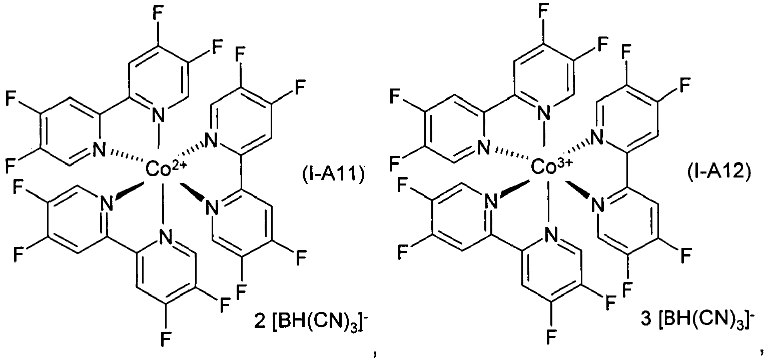

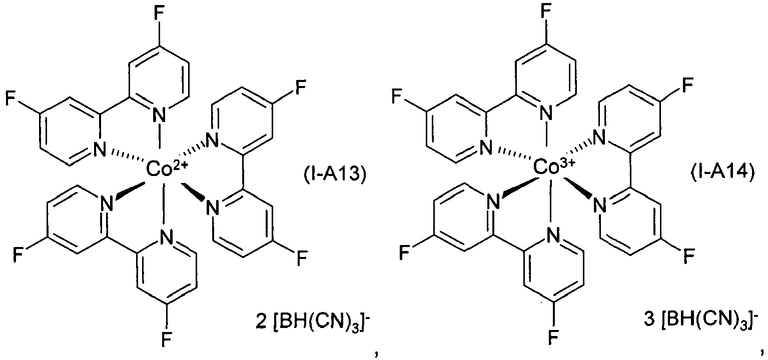

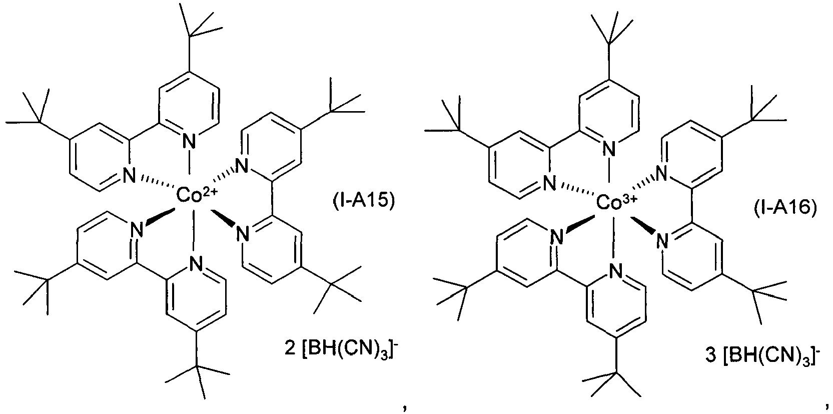

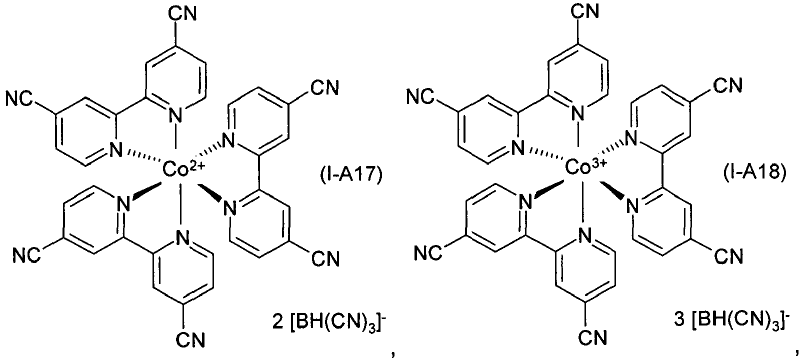

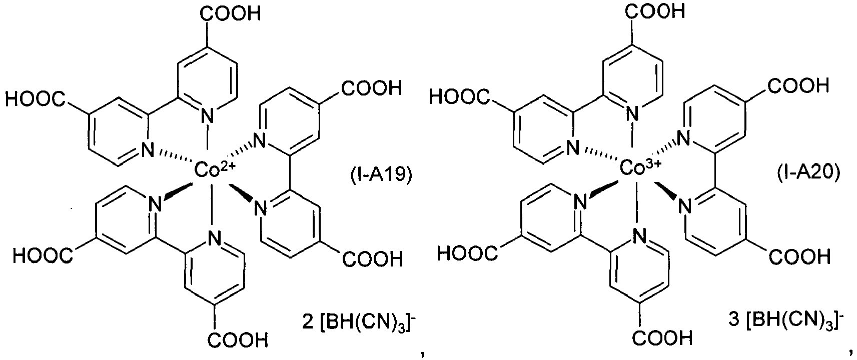

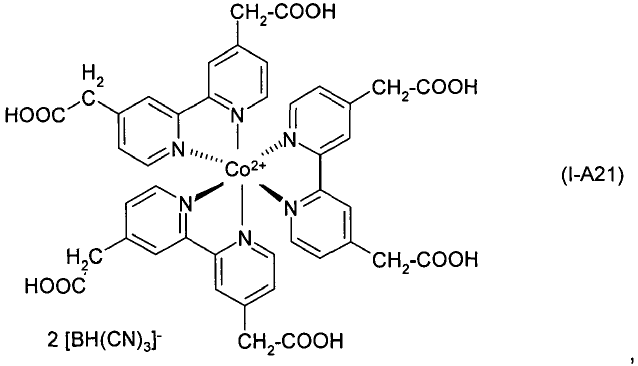

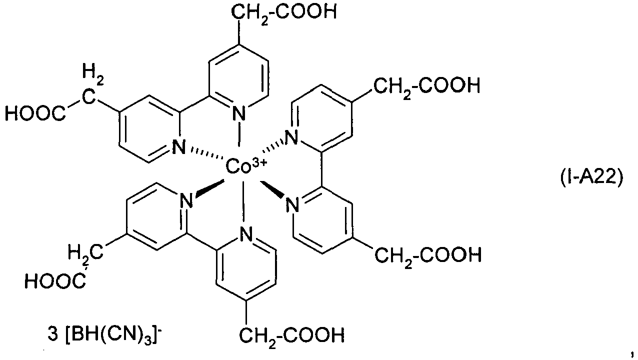

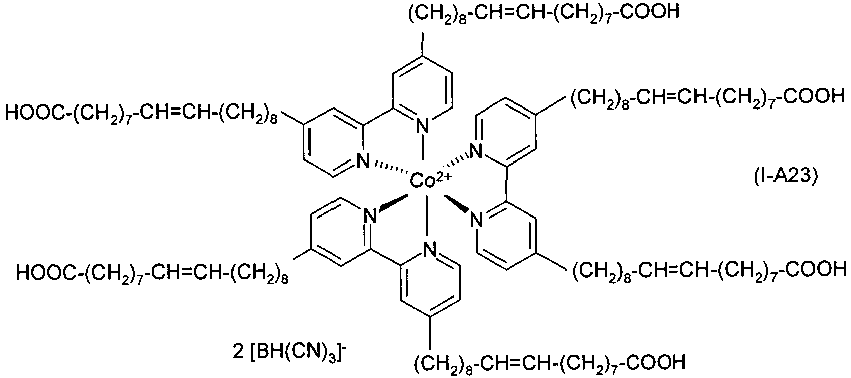

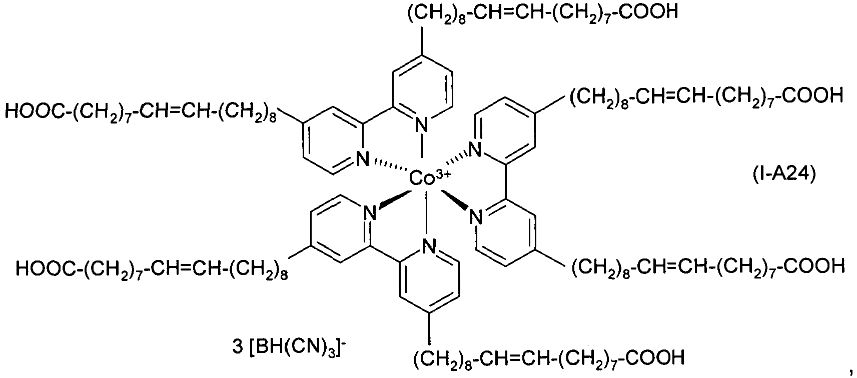

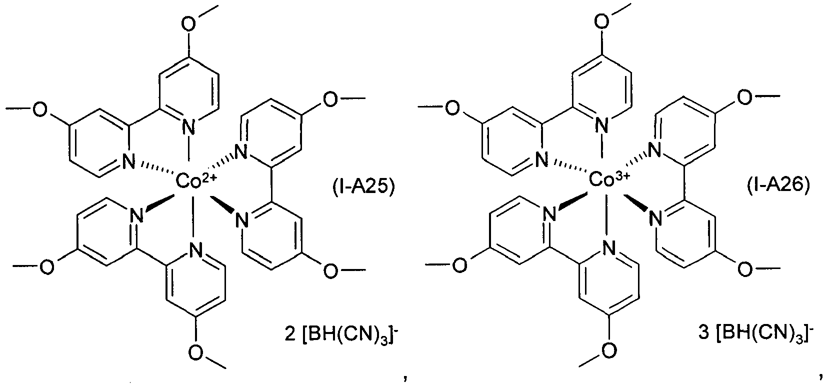

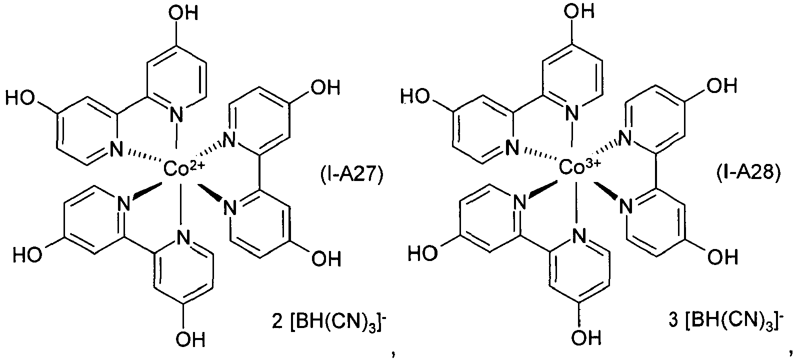

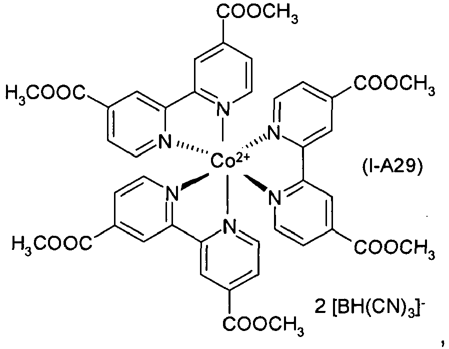

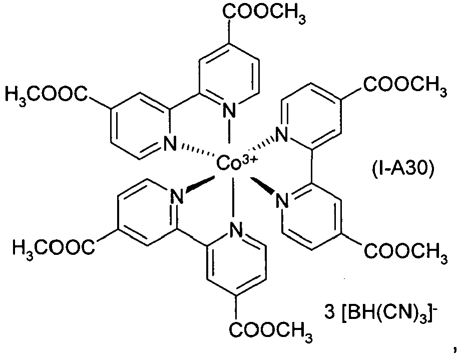

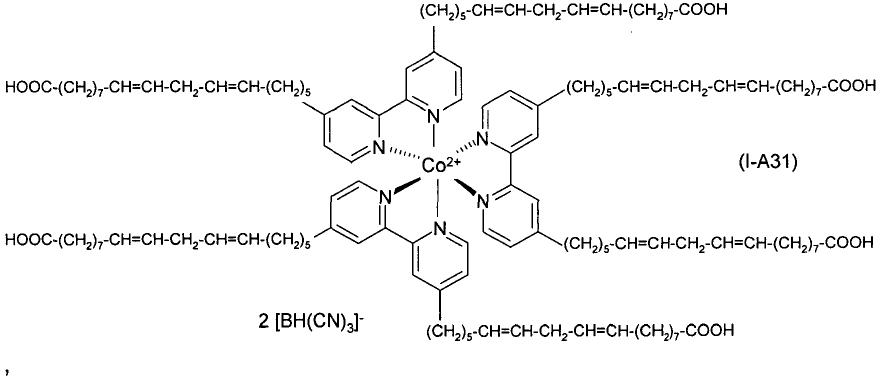

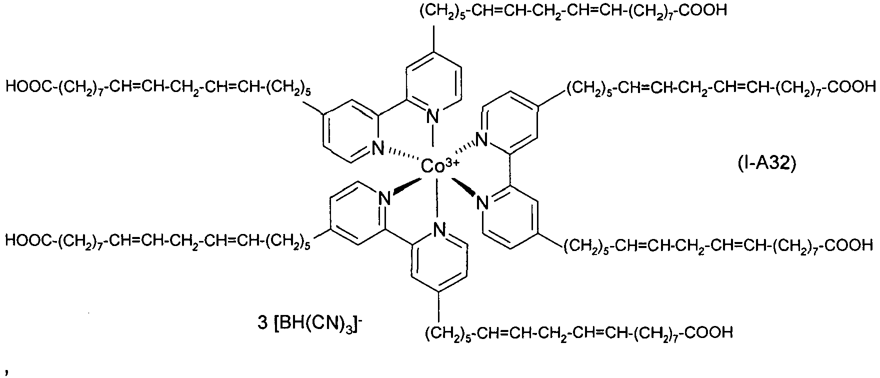

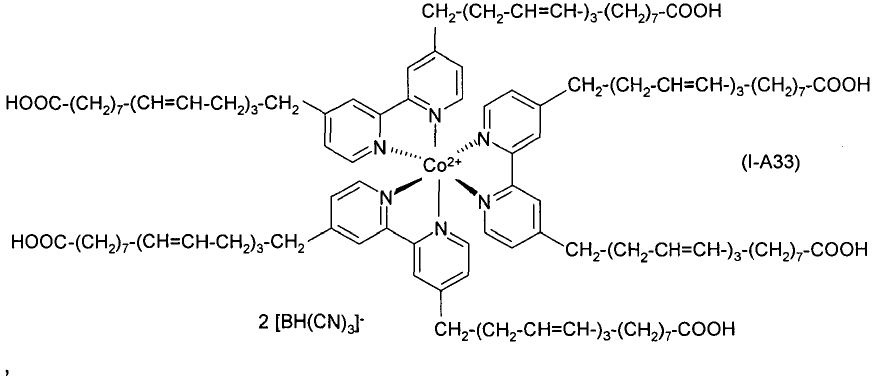

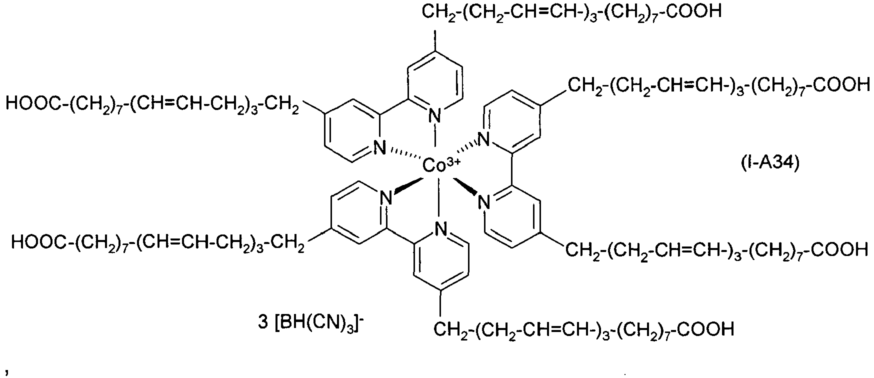

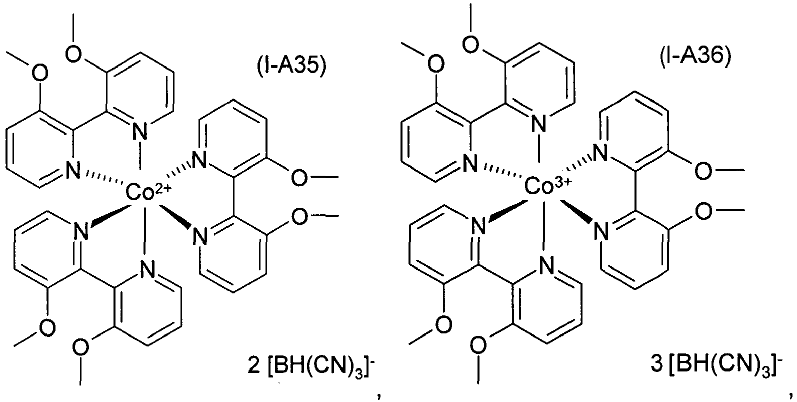

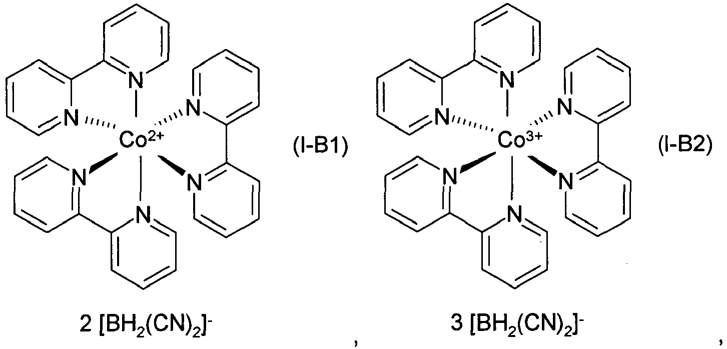

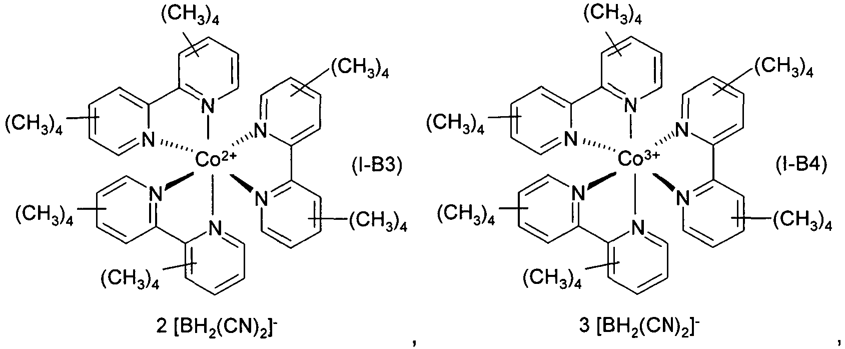

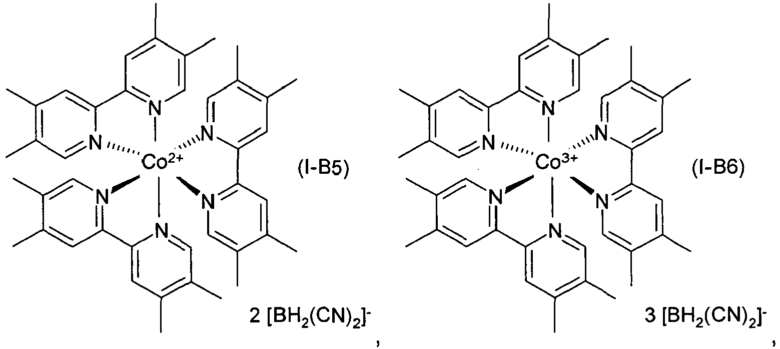

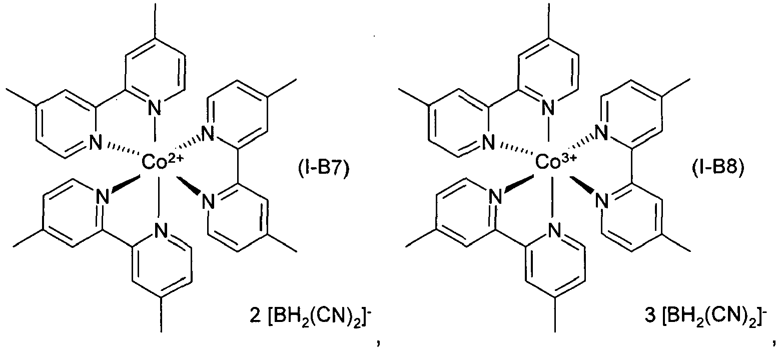

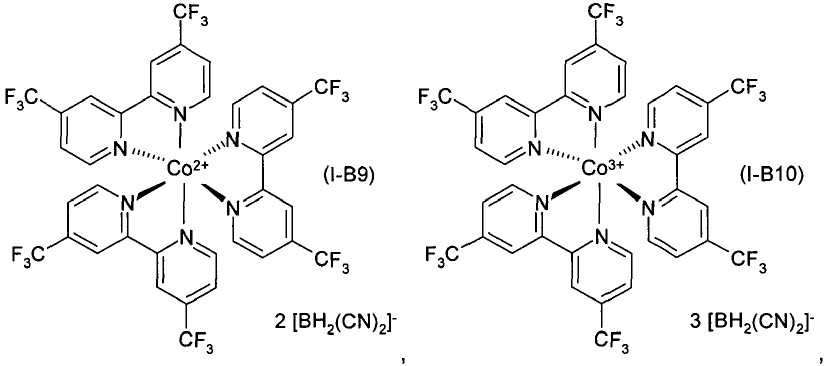

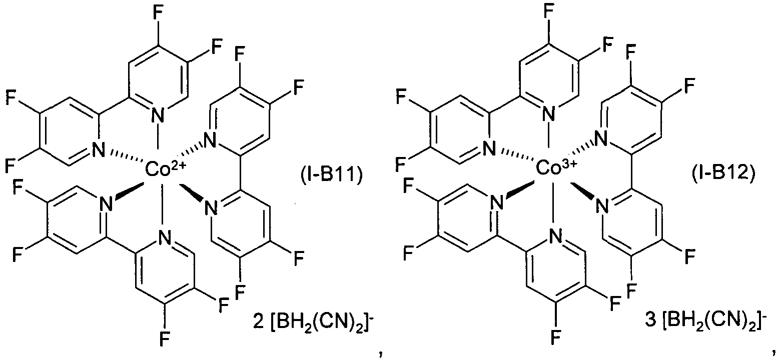

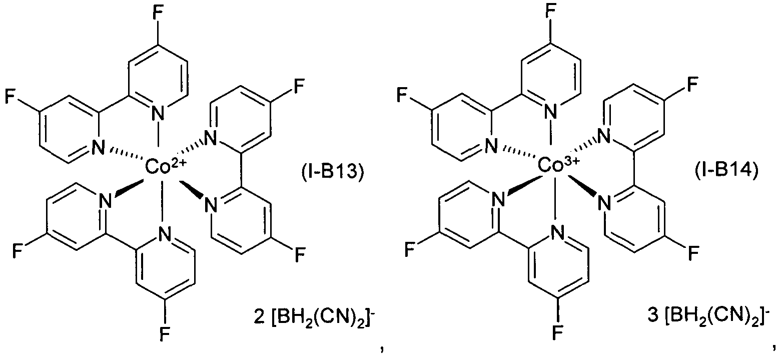

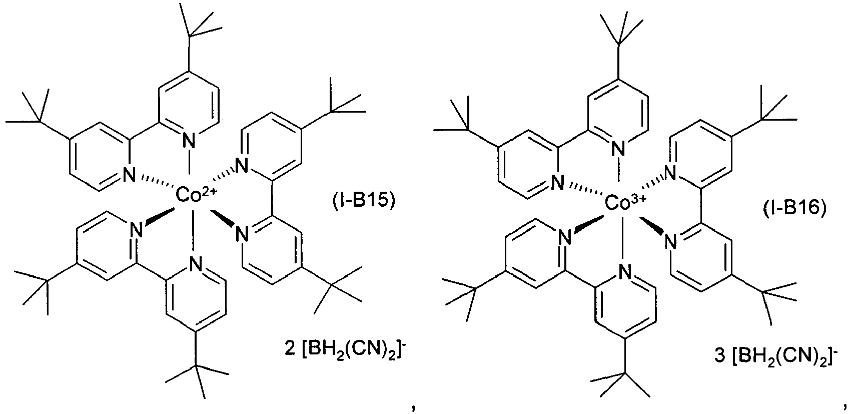

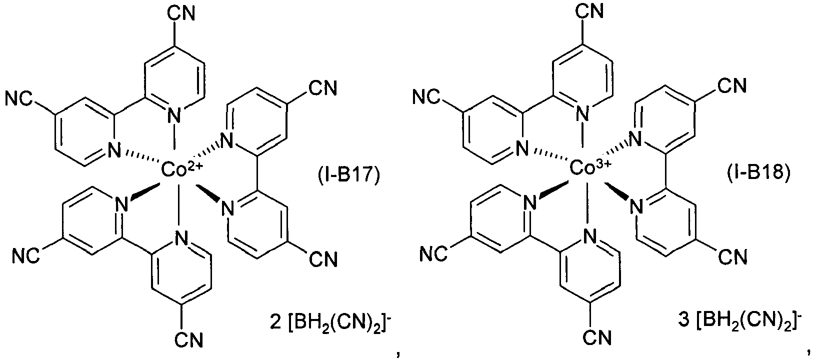

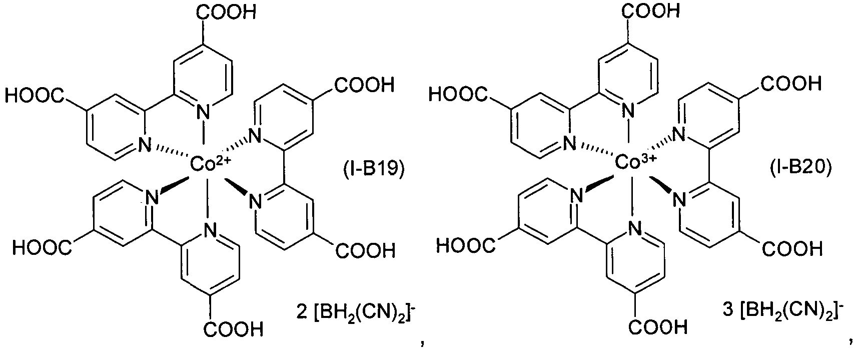

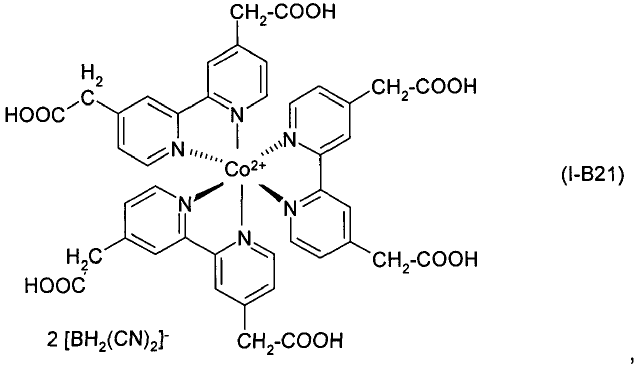

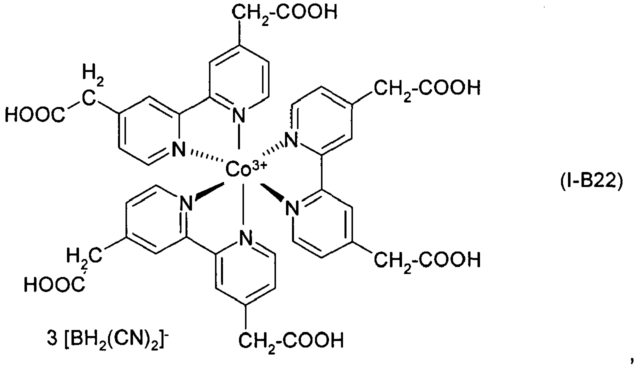

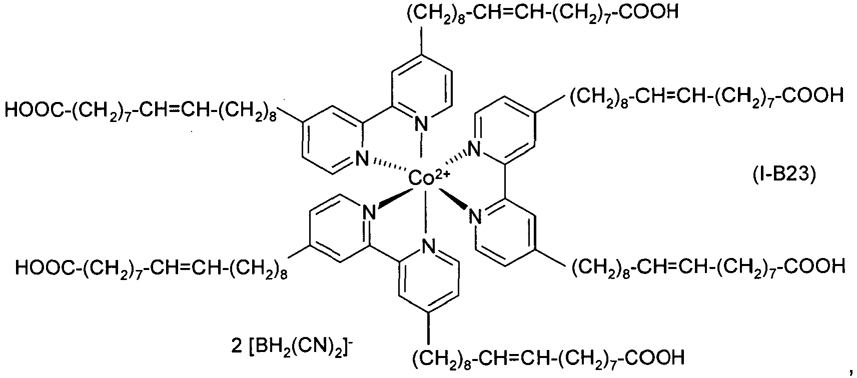

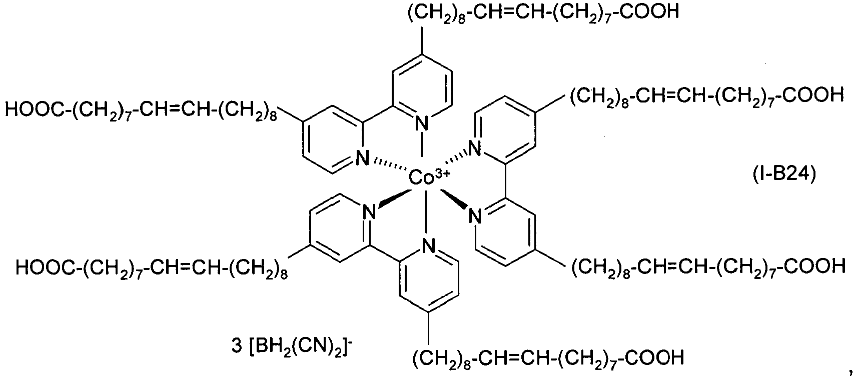

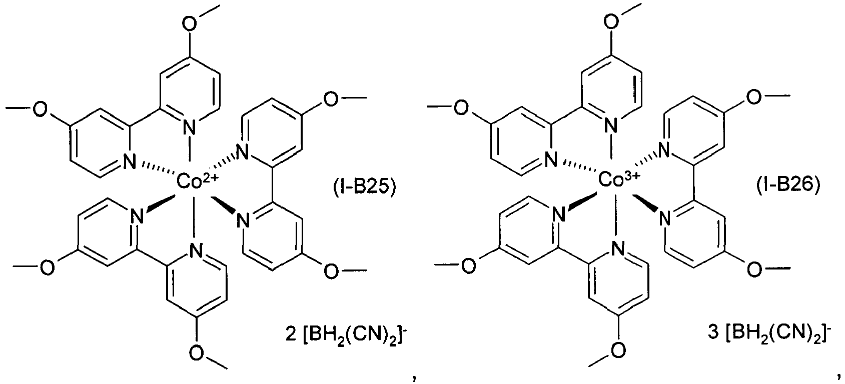

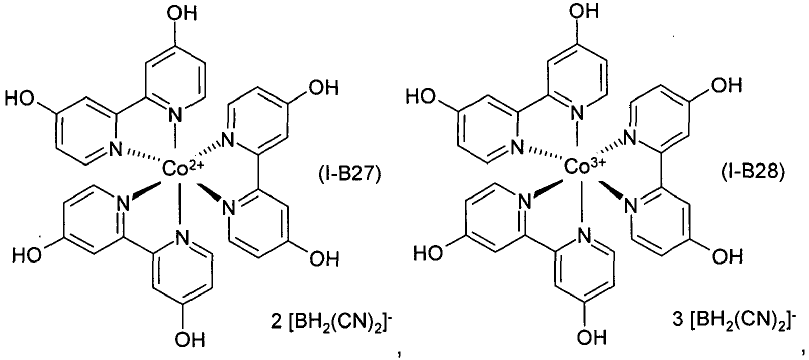

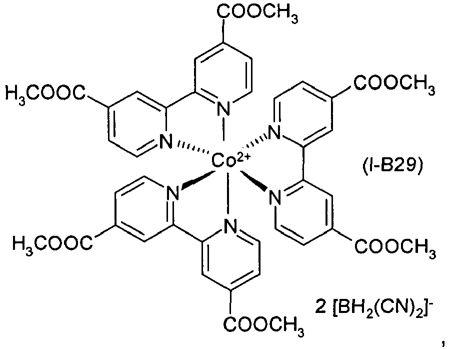

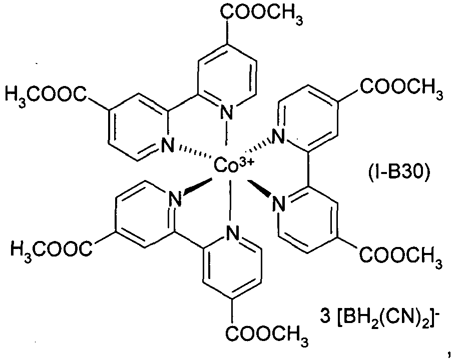

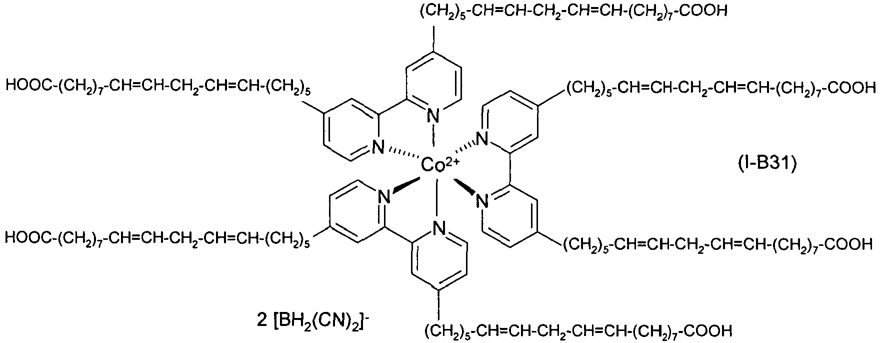

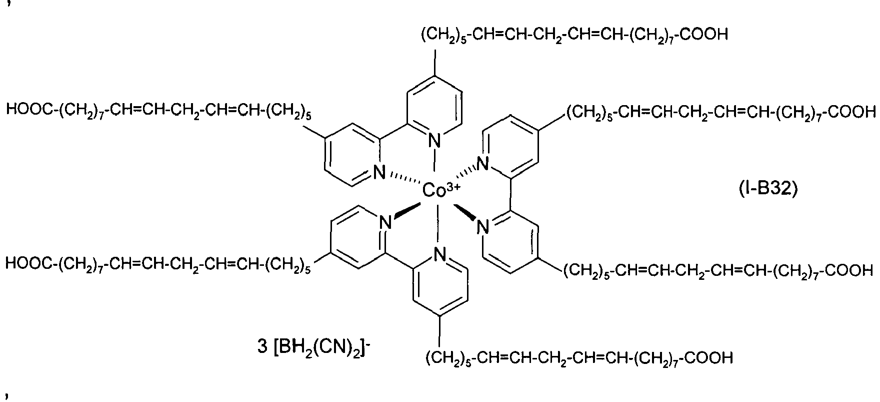

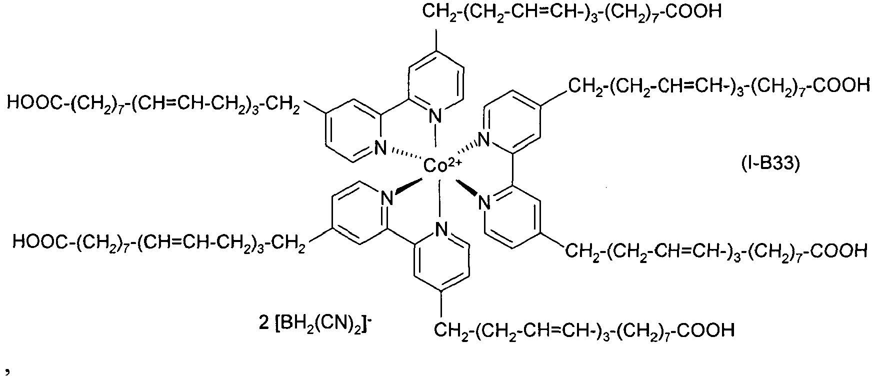

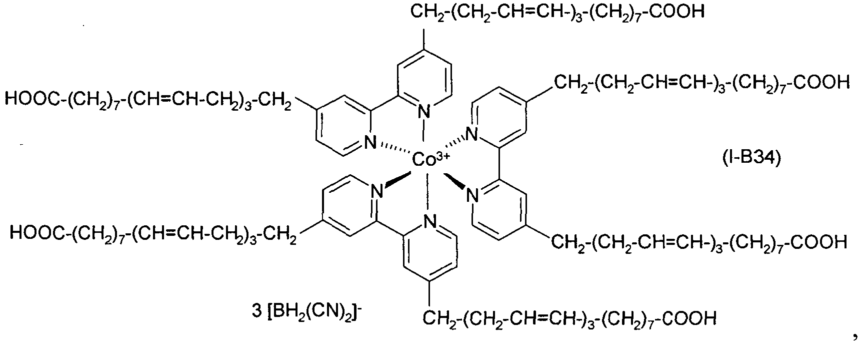

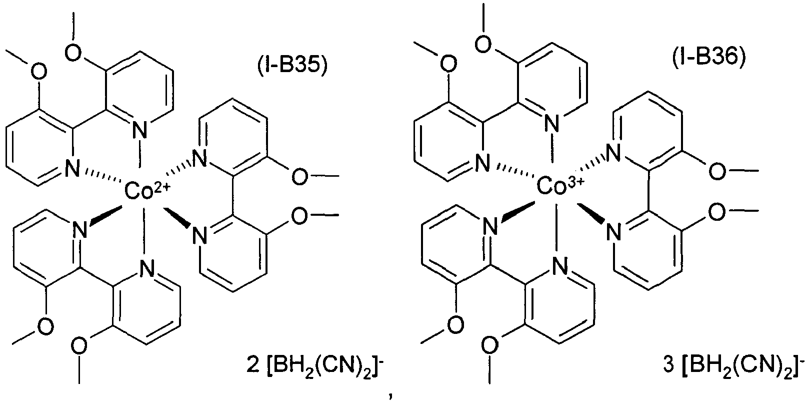

Examples of Co^{II}/Co^{III}-redox couples of formula (I) are the following mixtures:
I-A1 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A1 is preferably combined with I-A2.
I-A3 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A3 is preferably combined with I-A4.
I-A5 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A5 is preferably combined with I-A6,
I-A7 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A7 is preferably combined with I-A8,
I-A9 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A9 is preferably combined with I-A10,
I-A11 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A11 is preferably combined with I-A12,
I-A13 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A13 is preferably combined with I-A14,
I-A15 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A15 is preferably combined with I-A16,
I-A17 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A17 is preferably combined with I-A18,
I-A19 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A19 is preferably combined with I-A20,
I-A21 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A21 is preferably combined with I-A22,
I-A23 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A23 is preferably combined with I-A24,
I-A25 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A25 is preferably combined with I-A26,
I-A27 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A27 is preferably combined with I-A28,
I-A29 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A29 is preferably combined with I-A30,
I-A31 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A31 is preferably combined with I-A32,
I-A33 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A33 is preferably combined with I-A34,
I-A35 and one compound selected from I-A2, I-A4, I-A6, I-A8, I-A10, I-A12, I-A14, I-A16, I-A18, I-A20, I-A22, I-A24, I-A26, I-A28, I-A30, I-A32, I-A34, I-A36; I-A35 is preferably combined with I-A36,
I-B1 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B1 is preferably combined with I-B2,
I-B3 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B3 is preferably combined with I-B4,
I-B5 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B5 is preferably combined with I-B6,
I-B7 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B7 is preferably combined with I-B8,
I-B9 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B9 is preferably combined with I-B10,
I-B11 and one compound selected from I-B2, I-B4, I-B6, I-B8, I-B10, I-B12, I-Bl4, I-Bl6, I-B18, I-B20, I-B22, I-B24, I-B26, I-B28, I-B30, I-B32, I-B34, I-B36; I-B11 is preferably combined with I-B12,
I-B13 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B13 is preferably combined with I-B14,
I-B15 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B15 is preferably combined with I-B16,
I-B17 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B17 is preferably combined with I-B18,
I-B19 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B19 is preferably combined with I-B20,
I-B21 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B21 is preferably combined with I-B22,
I-B23 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B23 is preferably combined with I-B24,
I-B25 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B25 is preferably combined with I-B26,
I-B27 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B27 is preferably combined with I-B28,
I-B29 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B29 is preferably combined with I-B30,
I-B31 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B31 is preferably combined with I-B32,
I-B33 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B33 is preferably combined with I-B34,
I-B35 and one compound selected from I-B2, I-B4, I-B6, I-B8, I-B10, I-B12, I-B14, I-B16, I-B18, I-B20, I-B22, I-B24, I-B26, I-B28, I-B30, I-B32, I-B34, I-B36; I-B35 is preferably combined with I-B36.

Compounds of formula (I) in which n is 2 can be synthesized through reaction of a compound of formula (II)

Kt[BH_{z}(CN)_{4-z}] (II),

in which
z is 1 or 2 and
Kt is an alkali metal cation
with Cobalt dichloride or a hydrate thereof and with at least three equivalents of bipyridine of formula III 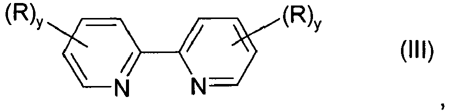 in which
   y is each independently 0, 1, 2, 3 or 4,
   R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
   wherein two or more adjacent CH₂-groups within the substituent (CH₂)ₘ-COOR' can optionally be replaced with (-CH=CH-),
   m is a number from 0 to 20 and
   R' is H or a straight-chain or branched alkyl group with 1 to 20 C atoms, a straight-chain or branched alkenyl group with 2 to 20 C atoms or a straight-chain or branched alkynyl group with 2 to 20 C atoms.

Compounds of formula (I) in which n is 3 can be synthesized through reaction of a compound of formula (II)

Kt[BH_{z}(CN)_{4-z}] (II),

in which
z is 1 or 2 and
Kt is an alkali metal cation
with Cobalt dichloride or a hydrate thereof and with at least three equivalents of bipyridine of formula III 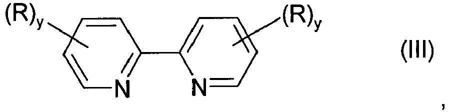 in which
   y is each independently 0, 1, 2, 3 or 4,
   R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
   wherein two or more adjacent CH₂-groups within the substituent (CH₂)ₘ-COOR' can optionally be replaced with (-CH=CH-),
   m is a number from 0 to 20 and
   R' is H or a straight-chain or branched alkyl group with 1 to 20 C atoms, a straight-chain or branched alkenyl group with 2 to 20 C atoms or a straight-chain or branched alkynyl group with 2 to 20 C atoms, in the presence of an oxidant.

The oxidant or oxidizer may be selected from chlorine gas, bromine, aqueous NaOCl or H₂O₂. It is preferred to use chlorine gas or NaOCl.

Compounds of formula (II) are preferably potassium or sodium salts, particularly preferred potassium salts.

Alkali metal salts of formula (II) in which z is 1 (formula II-A)

[Kt][BH(CN)₃] (II-A)

can be synthesized through reaction of an alkali metal tetracyanoborate [Me¹][B(CN)₄] with an alkali metal [Me],
where [Me¹] denotes an alkali metal cation which is different or equal to the alkali metal [Me] resulting in the formation of a compound of formula (IV)

{[Me]⁺}₂ [B(CN)₃]²⁻ (IV)

in which [Me]⁺ denotes the alkali metal cation of the alkali metal followed by the protonation of the compound of formula (IV) resulted from the previous reaction.

Alkali metal tetracyanoborates can be synthesized according to WO 2004/072089, especially as disclosed in examples 1 to 3.
Alkali metals are commercially available materials.

[Me¹]⁺ is preferably K⁺ or Na⁺, especially preferably K⁺. [Me] is preferably lithium, sodium, potassium or their mixtures, especially preferably sodium.

The process for the preparation of compounds of the formula (II-A) in which [Kt] is an alkali metal cation as described above is carried out in liquid ammonia or in organic solvents which are inert to alkali metals, for example tetrahydrofuran, dialkyl ethers or amide-based solvents. If reaction proceeds in organic solvent the application of some catalysts, for example benzophenone, can accelerate the process and improve the yield of compounds of formula (IV).
Useful amide solvents are N,N-dimethylformamide, N,N-dimethylacetamide, N-methylpyrrolidone or HMPT (hexamethylphosphortriamide).

Liquid ammonia is condensed at temperatures around -78°C and the reaction mixture is warmed up to a temperature between -50°C to -30°C in the presence of an inert atmosphere, like nitrogen or argon followed by warming up to 10°C to 30°C and evaporation of ammonia.
The protonation in step 2 is preferably carried out in water at temperatures between 15°C and 30°C, preferably at room temperature, in the absence or in the presence of an inorganic base such as alkali metal carbonates or acetates, or organic bases, preferably trialkylamines. For the protonation in step 2, any source of proton can be used beside water, for example alcohols, carboxylic acids, mineral acids, tertiary ammonium salts such as [R₃NH⁺ Cl⁻] in which R is each independently a straight-chain or branched alkyl group with 1 to 4 C atoms or [NH₄Cl].

It is preferable to purify the compounds of formula (II-A) by extraction with an organic solvent.
Useful organic solvents are for example, acetonitrile, dimethoxyethane, diglyme, tetrahydrofurane, or methyl-*tert*-butyl ether.

Alkali metal salts of formula (II) in which z is 2 (formula (II-B))

[Kt][BH₂(CN)₂] (II-B)

may be synthesized according to or based on already known methods as described in Zhang Y. and Shreeve J.M. Angew. Chem. 2011, 123, 965-967; Spielvogel B.F. et al, Inorg. Chem. 1984, 23, 3262-3265; Das M.K. et al, Bull. Chem. Soc. Jpn., 63, 1281-1283, 1990 and B. Györi et al, Journal of Organometallic Chemistry, 255, 1983, 17-28.

Compounds of formula (II-B) in which [Kt] is Na⁺ can be prepared additionally in a very simple way through reaction of sodium tetrahydrido-borate with trialkylsilylcyanide in which the alkyl groups independently denotes straight-chain or branched alkyl groups having 1 to 4 C atoms.

This process can be carried out in air, preferably in a dry atmosphere, for example under dry air, nitrogen or argon and may be carried out in an organic solvent or in the absence of an organic solvent if one starting material is liquid at the reaction temperature, at a temperature between 10°C and 200°C.

Useful organic solvents are for example, acetonitrile, dimethoxyethane, diglyme, tetrahydrofurane, or methyl-*tert*-butyl ether.

Sodium tetrahydrido-borate and trimethylsilylcyanide are commercially available.

Cobalt dichloride or hydrates thereof and bipyridines of formula (III) 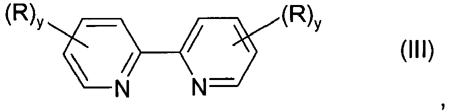 in which
y is each independently 0, 1, 2, 3 or 4,
R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
wherein two or more adjacent CH₂-groups within the substituent (CH₂)ₘ-COOR' can optionally be replaced with (-CH=CH-),
m is a number from 0 to 20 and
R' is H or a straight-chain or branched alkyl group with 1 to 20 C atoms, a straight-chain or branched alkenyl group with 2 to 20 C atoms or a straight-chain or branched alkynyl group with 2 to 20 C atoms,
are commercially available or can be synthesized according to already known methods in the art as described in "Organikum", 2001, WILEY-VCH, Weinheim; R.C. Larock, "Comprehensive Organic Transformations, A Guide to Functional Group Preparations", Second Edition, 1999, WILEY-VCH, N.Y. Chichester, Weinheim.

The synthesis of compounds of formula (I) in which n is 2 or 3 is carried out in water or a mixture of water and an organic solvent, preferably water and methanol, and the preferred reaction temperature is room temperature.

Therefore, the invention also relates to a process for the preparation of compounds of formula (I) in which n is 2 comprising the reaction of a compound of formula (II)

Kt[BH_{z}(CN)_{4-z}] (II),

in which
z is 1 or 2 and
Kt is an alkali metal cation
with Cobalt dichloride or a hydrate thereof and with at least three equivalents of bipyridine of formula (III) 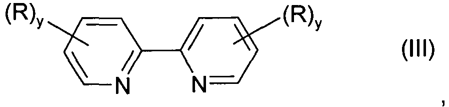 in which
   y is each independently 0, 1, 2, 3 or 4,
   R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms, wherein two or more adjacent CH₂-groups within the substituent (CH₂)ₘ-COOR' can optionally be replaced with (-CH=CH-),
   m is a number from 0 to 20 and
   R' is H or a straight-chain or branched alkyl group with 1 to 20 C atoms, a straight-chain or branched alkenyl group with 2 to 20 C atoms or a straight-chain or branched alkynyl group with 2 to 20 C atoms.

In addition, the invention also relates to a process for the preparation of compounds of formula (I) in which n is 3 comprising the reaction of a compound of formula (II)

Kt[BH_{z}(CN)_{4-z}] (II),

in which
z is 1 or 2 and
Kt is an alkali metal cation
with Cobalt dichloride or a hydrate thereof and with at least three equivalents of bipyridine of formula III 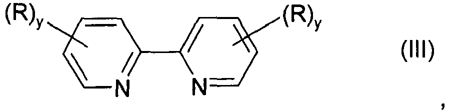 in which
   y is each independently 0, 1, 2, 3 or 4,
   R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
   wherein two or more adjacent CH₂-groups within the substituent (CH₂)ₘ-COOR' can optionally be replaced with (-CH=CH-),
   m is a number from 0 to 20 and
   R' is H or a straight-chain or branched alkyl group with 1 to 20 C atoms, a straight-chain or branched alkenyl group with 2 to 20 C atoms or a straight-chain or branched alkynyl group with 2 to 20 C atoms, in the presence of an oxidant.

The compounds of formula (I), especially the Co^{II}/Co^{III}-redox couples of formula (I) as explained before according to this invention, are preferably used in electrochemical and/or optoelectronic devices, especially in electrolyte formulations.

The present invention therefore relates furthermore to an electrolyte formulation comprising at least one compound of formula (I) as described above or preferably described herein.

It is preferred that at least two compounds of formula (I) are comprised one compound corresponding to formula (Ia) and the other corresponding to formula (Ib) as described before and defined as Co^{II}/Co^{III}-redox couple of formula (I).

The present invention therefore relates furthermore to an electrolyte formulation comprising at least one Co^{II}/Co^{III}-redox couple of formula (I), (IA) or (IB) as described above or preferably described herein.

Electrolyte formulations comprising at least one compound of formula (I), (IA) or (IB) as described or preferably described before or comprising at least one Co^{II}/Co^{III}-redox couple of formula (I), (IA) or (IB) as described above or preferably described before, can be preferably used in electrochemical and/or optoelectronic devices such as a photovoltaic cell, a light emitting device, an electrochromic or photo-electrochromic device, an electrochemical sensor and/or biosensor.

Electrolyte formulations according to the invention can be preferably used in photovoltaic cells, preferably in dye sensitized solar cells.

Such electrolyte formulations form a crucial part of the disclosed devices and the performance of the device largely depends on the physical and chemical properties of the various components of these electrolytes.

Electrolyte formulations according to the invention are alternatives to already known electrolyte formulations. They show in the field of electrolyte formulations of dye sensitized solar cells a better performance of DSSC in comparison to the already known Co^{II}/Co^{III}-redox couples with other anions. DSSC's according to the invention show a higher short-circuit current density (I_{sc}) and a better solar-to-electric power-conversion efficiency (PCE, η).

In chemistry, an electrolyte is any substance containing free ions that make the substance electrically conductive. The most typical electrolyte is an ionic solution, but molten electrolytes and solid electrolytes are also possible.

An electrolyte formulation according to the invention is therefore an electrically conductive medium, basically due to the presence of at least one substance that is present in a dissolved and or in molten state and undergo dissociation into ionic species, i.e. supporting an electric conductivity via motion of ionic species. However, the said electric conductivity may not be of the major relevance to the role of the electrolyte of a dye-sensitised solar cell. Therefore, the scope of this invention is not limited to highly conductive electrolyte media.

The term electrolyte may be used for the term electrolyte formulation as well comprising all ingredients as disclosed for the electrolyte formulation.

The electrolyte formulation may include or comprise, essentially consist of or consist of the said requisite or optional constituents. All compounds or components which can be used in the preparations are either known and commercially available or can be synthesised by known or already described processes.

Typical molar concentrations of at least one compound of formula (I), (IA) or (IB) as described above in the electrolyte formulations range from 0.01 M to 0.5 M, preferably from 0.05 M to 0.3 M. This molar concentration in the electrolyte may be achieved with one or more compounds of formula (I), (IA) or (IB).

In general, it is preferred that the molar concentration of the at least one compound of formula (I), (IA) or (IB) in which n is 2 range from 0.1 to 0.3 M.

In general, it is preferred that the molar concentration of at least one compound of formula (I), (IA) or (IB) in which n is 2 range from 0.1 to 0.3 M, preferably 0.2 to 0.25 M, and the molar concentration of at least one compound of formula (I), (IA) or (IB) in which n is 3 range from 0.01 to 0.1 M, preferably 0.04 to 0.05 M.

For the purpose of the present invention, the molar concentration refer to the concentration at 25°C.

The present electrolyte formulation may furthermore comprise a further redox active species such as iodide/tri-iodide, Ferrocene derivatives or Co(II)/Co(III) complex salts such as Co(II)/Co(III)(dbbip)₂ in which dbbip means 2,6-bis(1'-butylbenzimidazol-2'-yl)pyridine, the counter anion being either perchlorate, fluoroperfluoroalkylphosphate such as perfluoroethylpentafluorophosphate, or (fluoro)cyanoborate, particularly tetracyanoborate.

Other components of the electrolyte formulation are one or several further salts, e.g. ionic liquids, solvents, and other additives, as indicated further below.

The electrolyte formulation of the present invention comprises an organic solvent and/or comprises one or more ionic liquids.

Organic solvents may be selected from those disclosed in the literature. Preferably, the solvent, if present, has a boiling point higher than 160 degrees centigrade, more preferably higher than 190 degrees such as propylene carbonate, ethylene carbonate, butylene carbonate, gamma-butyrolactone, gamma-valerolactone, glutaronitrile, adiponitrile, N-methyloxazolidinone, N-methylpyrrolidinone, N,N'-dimethylimidazolidinone, N,N-dimethylacetamide, cyclic ureas preferably 1,3-dimethyl-2-imidazolidinone or 1,3-dimethyl-3,4,5,6-tetrahydro-2(1H)-pyrimidinone, glymes preferably tetraglyme, sulfolane, sulfones such as (propane-2-sulfonyl)-benzene, 2-ethanesulfonyl-butane, 2-(2-methoxyethanesulfonyl)-propane, 2-(propane-2-sulfonyl)-butane, 3-methylsulfolane, dimethylsulfoxide, trimethylphosphate and methoxy-substituted nitriles. Other useful solvents are acetonitrile, benzonitrile and or valeronitrile.

If a solvent is present in the electrolyte formulation, there may further be comprised a polymer as gelling agent, wherein the polymer is polyvinylidenefluoride, polyvinylidene-hexafluropropylene, polyvinylidene-hexafluoropropylene-chlorotrifluoroethylene copolymers, nafion, polyethylene oxide, polymethylmethacrylate, polyacrylonitrile, polypropylene, polystyrene, polybutadiene, polyethyleneglycol, polyvinylpyrrolidone, polyaniline, polypyrrole, polythiophene. The purpose of adding these polymers to electrolyte formulations is to make liquid electrolytes into quasi-solid or solid electrolytes, thus improving solvent retention, especially during aging.

In one embodiment of the invention, the electrolyte formulation according to the invention comprises merely an organic solvent and further additives such as lithium salts, guanidinium thiocyanates or classical additives such as a compound containing a nitrogen atom having non-shared electron pairs, e.g. N-alkylbenzimidazoles or alkyl-pyridines and bases having pKa between 3 to 6.

Lithium salts may be selected from the group lithium tetrafluoroborate, lithium perchlorate, lithium thiocyanate, lithium tetracyanoborate, lithium trifluoromethanesulfonate, lithium hexafluorophosphate, lithium tris(perfluororalkyl)trifluorophosphates, lithium bis(perfluoroalkyl)tetrafluorophosphates, lithium mono(perfluoroalkyl)pentafluorophosphates or lithium perfluoroalkylfluoroborate, wherein the perfluoroalkyl groups each independently are straight-chain or branched perfluoroalkyl groups having 1 to 10 C atoms, preferably 2 to 4 C atoms.

In another embodiment of the invention, the electrolyte formulation according to the invention comprises an organic solvent in less than 50%, and further comprising an ionic liquid as solvent. Preferably, the electrolyte formulation comprises less than 40%, more preferably less than 30%, still more preferably less than 20% and even less than 10 % organic solvent. Most preferably, the electrolyte formulation comprises less than 5% of an organic solvent. For example, it is substantially free of an organic solvent. Percentages are indicated on the basis of weight %.

Ionic liquids or liquid salts are ionic species which consist of an organic cation and a generally inorganic anion. They do not contain any neutral molecules and usually have melting points below 373 K.

Preferred ionic liquids have organic cations comprising a quaternary nitrogen and an anion selected from a Br⁻, Cl⁻, a polyhalide ion, a fluoroalkanesulfonate, a fluoroalkanecarboxylate, a tris(fluoroalkylsulfonyl)methide, a bis(fluoroalkylsulfonyl)imide, bis(fluorsulfonyl)imide, a nitrate, a hexafluorophosphate, a tris- , bis- and mono-(fluoroalkyl)fluorophosphate, a tetrafluoroborate, a dicyanamide, a tricyanomethide, a tetracyanoborate, a monofluorotricyanoborate, a difluorodicyanoborate, a perfluoroalkylfluoroborate, perfluoroalkylfluorocyanoborate, a thiocyanate, an alkylsulfonate or an alkylsulfate, with fluoroalkane-chain having 1 to 20 C atoms, preferably perfluorinated, fluoroalkyl having 1 to 20 C atoms and alkyl having 1 to 20 C atoms. Fluoroalkane-chain or fluoroalkyl is preferably perfluorinated.

Preferred ionic liquids have additionally the same anion [BH_{z}(CN)_{4-z}]⁻ as defined for the at least one compound of formula (I) as described herein.

Particularly preferred ionic liquids have cations chosen from the group of 1,1-dialkylpyrrolidinium cations,for example, 1,1-dimethylpyrrolidinium, 1-methyl-1-ethylpyrrolidinium, 1-methyl-1-propylpyrrolidinium, 1-methyl-1-butylpyrrolidinium, 1-methyl-1-pentylpyrrolidinium, 1-methyl-1-hexyl-pyrrolidinium, 1-methyl-1-heptylpyrrolidinium, 1-methyl-1-octylpyrrolidinium, 1-methyl-1-nonylpyrrolidinium, 1-methyl-1-decylpyrrolidinium, 1,1-diethyl-pyrrolidinium, 1-ethyl-1-propylpyrrolidinium, 1-ethyl-1-butylpyrrolidinium, 1-ethyl-1-pentylpyrrolidinium, 1-ethyl-1-hexylpyrrolidinium, 1-ethyl-1-heptyl-pyrrolidinium, 1-ethyl-1-octylpyrrolidinium, 1-ethyl-1-nonylpyrrolidinium, 1-ethyl-1-decylpyrrolidinium, 1,1-dipropylpyrrolidinium, 1-propyl-1-methyl-pyrrolidinium, 1-propyl-1-butylpyrrolidinium, 1-propyl-1-pentylpyrrolidinium, 1-propyl-1-hexylpyrrolidinium, 1-propyl-1-heptylpyrrolidinium, 1-propyl-1-octylpyrrolidinium, 1-propyl-1-nonylpyrrolidinium, 1-propyl-1-decyl-pyrrolidinium, 1,1-dibutylpyrrolidinium, 1-butyl-1-methylpyrrolidinium, 1-butyl-1-pentylpyrrolidinium, 1-butyl-1-hexylpyrrolidinium, 1-butyl-1-heptyl-pyrrolidinium, 1-butyl-1-octylpyrrolidinium, 1-butyl-1-nonylpyrrolidinium, 1-butyl-1-decylpyrrolidinium, 1,1-dipentylpyrrolidinium, 1-pentyl-1-hexyl-pyrrolidinium, 1-pentyl-1-heptylpyrrolidinium, 1-pentyl-1-octylpyrrolidinium, 1-pentyl-1-nonylpyrrolidinium, 1-pentyl-1-decylpyrrolidinium, 1,1-dihexyl-pyrrolidinium, 1-hexyl-1-heptylpyrrolidinium, 1-hexyl-1-octylpyrrolidinium, 1-hexyl-1-nonylpyrrolidinium, 1-hexyl-1-decylpyrrolidinium, 1,1-dihexyl-pyrrolidinium, 1-hexyl-1-heptylpyrrolidinium, 1-hexyl-1-octylpyrrolidinium, 1-hexyl-1-nonylpyrrolidinium, 1-hexyl-1-decylpyrrolidinium, 1,1-diheptyl-pyrrolidinium, 1-heptyl-1-octylpyrrolidinium, 1-heptyl-1-nonylpyrrolidinium, 1-heptyl-1-decylpyrrolidinium, 1,1-dioctylpyrrolidinium, 1-octyl-1-nonyl-pyrrolidinium, 1-octyl-1-decylpyrrolidinium, 1,1-dinonylpyrrolidinium, 1-nonyl-1-decylpyrrolidinium or 1,1-didecylpyrrolidinium. Very particular preference is given to 1-butyl-1-methylpyrrolidinium or 1-propyl-1-methyl-pyrrolidinium, 1-alkyl-1-alkoxyalkylpyrrolidinium cations, for example, 1-methoxymethyl-1-methyl-pyrrolidinium, 1-methoxymethyl-1-ethyl-pyrrolidinium, 1-(2-methoxyethyl)-1-methylpyrrolidinium, 1-(2-methoxyethyl)-1-ethylpyrrolidinium, 1-(2-methoxyethyl)-1-propyl-pyrrolidinium, 1-(2-methoxyethyl)-1-butylpyrrolidinium, 1-(2-ethoxyethyl)-1-methylpyrrolidinium, 1-ethoxymethyl-1-methylpyrrolidinium, 1-ethoxymethyl-1-ethyl-pyrrolidinium. Very particular preference is given to 1-(2-methoxyethyl)-1-methylpyrrolidinium, 1,3-dialkylimidazolium cations, for example, 1-ethyl-3-methylimidazolium, 1-methyl-3-propylimidazolium, 1,2,3-trimethylimidazolium, 1-ethyl-2,3-dimethylimidazolium, 1-propyl-2,3-dimethylimidazolium, 1-butyl-2,3-dimethylimidazolium, 1-butyl-3-methylimidazolium, 1-methyl-3-pentylimidazolium, 1-ethyl-3-propylimidazolium, 1-butyl-3-ethylimidazolium, 1-ethyl-3-pentylimidazolium, 1-butyl-3-propyl-imidazolium, 1,3-dimethylimidazolium, 1,3-diethylimidazolium, 1,3-dipropylimidazolium, 1,3-dibutylimidazolium, 1,3-dipentylimidazolium, 1,3-dihexylimidazolium, 1,3-diheptylimidazolium, 1,3-dioctylimidazolium, 1,3-dinonylimidazolium, 1,3-didecylimidazolium, 1-hexyl-3-methylimidazolium, 1-heptyl-3-methylimidazolium, 1-methyl-3-octylimidazolium, 1-methyl-3-nonylimidazolium, 1-decyl-3-methylimidazolium, 1-ethyl-3-hexyl-imidazolium, 1-ethyl-3-heptylimidazolium, 1-ethyl-3-octylimidazolium, 1-ethyl-3-nonylimidazolium or 1-decyl-3-ethylimidazolium. Particularly preferred cations are 1-ethyl-3-methylimidazolium, 1-butyl-3-methylimidazolium or 1-methyl-3-propylimidazolium, 1-alkoxyalkyl-3-alkylimidazolium cations, for example 1-methoxymethyl-3-methylimidazolium, 1-methoxymethyl-3-ethylimidazolium, 1-methoxymethyl-3-butylimidazolium, 1-(2-methoxyethyl)-3-methylimidazolium, 1-(2-methoxyethyl)-3-ethylimidazolium, 1-(2-methoxyethyl)-3-propylimidazolium, 1-(2-methoxyethyl)-3-butylimidazolium, 1-(2-ethoxyethyl)-3-methylimidazolium, 1-ethoxymethyl-3-methylimidazolium and 1-alkenyl-3-alkylimidazolium cations, for example 1-allyl-3-methyl-imidazolium or 1-allyl-2,3-dimethylimidazolium and the anions are selected as described before.

Preferably, the ionic liquids are selected from salts comprising cations as described above and anions such as thiocyanate, tetracyanoborate, monofluorotricyanoborate, difluorodicyanoborate, perfluoroalkylborate, perfluoroalkylfluorocyanoborate or anions of formula [BH_{z}(CN)_{4-z}]⁻, wherein z has a meaning as described for compounds of formula (I), (IA) or (IB).

The electrolyte formulation of the invention may further comprise metal oxide nanoparticles like SiO₂, TiO₂, Al₂O₃, MgO or ZnO, for example, which are also capable of increasing solidity and thus solvent retention.

In another embodiment, the electrolyte formulation of the present invention further comprises at least one compound containing a nitrogen atom having non-shared electron pairs. Examples of such compounds are found in EP 0 986 079 A2, starting on page 2, lines 40-55, and again from page 3, lines 14 extending to page 7, line 54.

Preferred examples of compounds having non-shared electron pairs include imidazole and its derivatives, particularly benzimidazole and its derivatives.

The electrolyte formulation of the invention has many applications. For example, it may be used in an optoelectronic and/or electrochemical device such as a photovoltaic cell, a light emitting device, an electrochromic or photo-electrochromic device, an electrochemical sensor and/or biosensor. The present invention therefore relates furthermore to an electrochemical and/or optoelectronic device comprising a first and a second electrode and, between said first and second electrode, a charge transport layer comprising at least one compound of formula (I) or at least one compound of formula (IA) or (IB) as described or preferably described in detail before.

The present invention therefore relates furthermore to an electrochemical and/or optoelectronic device comprising a first and a second electrode and, between said first and second electrode, a charge transport layer comprising at least one Co^{II}/Co^{III}-redox couple of formula (I) as described or preferably described in detail before or at least one Co^{II}/Co^{III}-redox couple of formula (IA) or (IB) as described or preferably described in detail before.

Preferably, the device according to the invention is a photoelectric conversion device, preferably a photovoltaic cell, particularly preferably a dye-sensitized solar cell or a solid-state dye-sensitized solar cell.

Preferably, the charge transport layer of the device according to the invention comprises an organic solvent and/or comprises one or more ionic liquids.

Organic solvents and ionic liquids are described in detail before.

The charge transport layer of the device according to the invention is in one embodiment of the invention the electrolyte formulation according to the invention as described or preferably described in detail before or with other words the charge transport layer is a solvent and/or ionic liquid based electrolyte or a solid electrolyte, preferably a solvent and/or ionic liquid based electrolyte.

Therefore, the invention additionally relates to the electrochemical and/or optoelectronic device wherein the at least one compound of formula (I), (IA) or (IB) is contained in the electrolyte formulation or with other words, the electrochemical and/or optoelectronic device comprises the electrolyte formulation according to the invention as described and preferably described before.

According to another embodiment of the invention, the at least one compound of formula (I), (IA) or (IB) as described or preferably described before, can be used as dopant in a charge transporting material building the charge transport layer of the device according to the invention. The charge transport material is preferably an organic, electronically conducting charge transporting material, in which electrons and/or holes move by electronic motion, instead of diffusion of charged molecules. Such electrically conductive layers may, for example, be based on organic compounds, including polymers.

The charge transport layer may therefore be an electron and/or hole conducting material. The at least one compound of formula (I), (IA) or (IB) as described or preferably described before, are useful dopants for triarylamine-based hole conductors.

The at least one compound of formula (I), (IA) or (IB) as described or preferably described before in which n is 3, are useful p-type dopants for triarylamine-based hole conductors.

Triarylamine-based hole conductors are known in the art. One important hole conductor is 2,2',7,7'-tetrakis(N,N-di-p-methoxyphenyl-amine)9,9'-spirobifluorene, also known as spiro-MeOTAD.

Therefore, the invention additionally relates to the use of at least one compound of formula (I), (IA) or (IB) as described or preferably described before, in which n is 3 as p-type dopant for triarylamine-based hole conductors, preferably for spiro-MeOTAD.

Additionally, the invention relates to a method of preparing an electrochemical device and/or optoelectronic device as described or preferably described before, the method comprising the steps of:
- providing a first and a second electrode;
- providing a charge transport layer,
adding to said charge transport layer at least one compound of formula (I), wherein z, y, R, m and R' have meaning as described or preferably described before.

Preferably, the invention relates to a method of preparing an electrochemical device and/or optoelectronic device as described or preferably described before, the method comprising the steps of:
- providing a first and a second electrode;
- providing a charge transport layer,
- adding to said charge transport layer at least one Co^{II}/Co^{III}-redox couple of formula (I), wherein y, R, m and R' are identical or different as described or preferably described before.

Dye sensitized solar cells are disclosed in US 6,861,722, for example. In dye -sensitized solar cells, a dye is used to absorb the sunlight to convert into the electrical energy. There are no restrictions per se with respect to the choice of the sensitizing dye as long as the LUMO energy state is marginally above the conduction bandedge of the photoelectrode to be sensitized. Examples of dyes are disclosed in Nanoenergy, de Souza, Flavio Leandro, Leite, Edson Roberto (Eds.), Springer, ISBN 978-3-642-31736-1, pages 58 to 74, black dyes as described in US 8,383,553 or dyes as disclosed in EP 0 986 079 A2, EP 1 180 774 A2 or EP 1 507 307 A1.

Preferred dyes are organic dyes such as MK-1, MK-2 or MK-3 (its structures are described in figure 1 of N. Koumura et al, J.Am.Chem.Soc. Vol 128, no.44, 2006, 14256-14257), D29 as described on page 4 of WO 2012/001033, D35 as described on page 4 of WO 2012/001033, D102 (CAS no. 652145-28-3), D-149 (CAS no. 786643-20-7), D205 (CAS no. 936336-21-9), D358 (CAS no. 1207638-53-6), YD-2 as described in T. Bessho et al, Angew. Chem. Int. Ed. Vol 49, 37, 6646-6649, 2010, Y123 (CAS no. 1312465-92-1), bipyridin-Ruthenium dyes such as N3 (CAS no. 141460-19-7), N719 (CAS no. 207347-46-4), Z907 (CAS no. 502693-09-6), C101 (CAS no. 1048964-93-7), C106 (CAS no. 1152310-69-4), K19 (CAS no. 847665-45-6), HRS-1 (CAS no. 906061-30-1 as disclosed in K.J. Jiang et al, Chem. Comm. 2460, 2006) or terpyridine-Ruthenium dyes such as N749 (CAS no. 359415-47-7).

The structure of D205 is

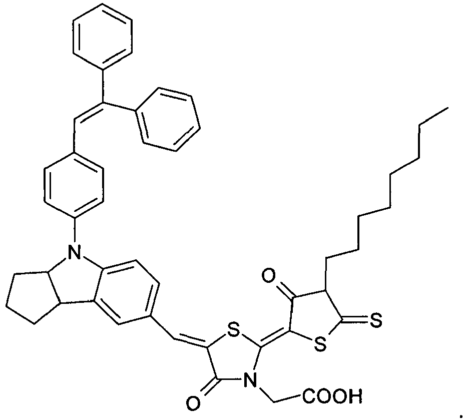

The structure of D358 is

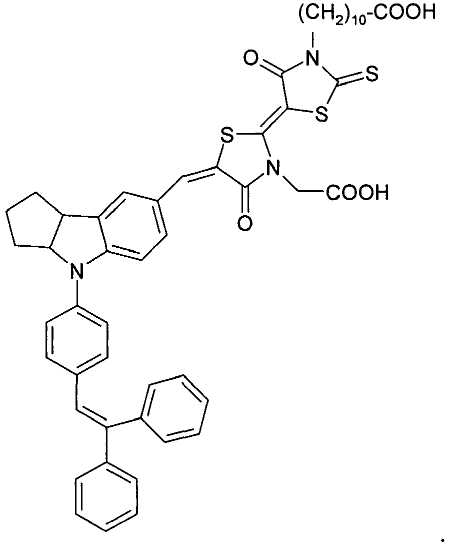

Particularly preferred dyes are Z907 or Z907Na which are both an amphiphilic ruthenium sensitizer, D29, D35, Y123, C106, D358 or HRS-1. The dye Z907Na means NaRu(2,2'-bipyridine-4-carboxylic acid-4'-carboxylate)(4,4'-dinonyl-2,2'-bipyridine)(NCS)₂.

A very particular dye is D358.

For example, a dye-sensitized solar cell comprises a photo-electrode, a counter electrode and, between the photo-electrode and the counter electrode, an electrolyte formulation or a charge transporting material, and wherein a sensitizing dye is absorbed on the surface of the photo-electrode, on the side facing the counter electrode.

According to a preferred embodiment of the device according to the invention, it comprises a semiconductor, the electrolyte formulation as described above and a counter electrode.

According to a preferred embodiment of the invention, the semiconductor is based on material selected from the group of Si, TiO₂, SnO₂, Fe₂O₃, WO₃, ZnO, Nb₂O₅, CdS, ZnS, PbS, Bi₂S₃, CdSe, GaP, InP, GaAs, CdTe, CuInS₂, and/or CuInSe₂. Preferably, the semiconductor comprises a mesoporous surface, thus increasing the surface optionally covered by a dye and being in contact with the electrolyte. Preferably, the semiconductor is present on a glass support or plastic or metal foil. Preferably, the support is conductive.

The device of the present invention preferably comprises a counter electrode. For example, fluorine doped tin oxide or tin doped indium oxide on glass (FTO- or ITO-glass, respectively) coated with Pt, carbon of preferably conductive allotropes, polyaniline or poly (3,4-ehtylenedioxythiophene) (PEDOT). Metal substrates such as stainless steel or titanium sheet may be possible substrates beside glass.

The device of the present invention in which the charge transport layer is a solvent and/or ionic liquid based electrolyte formulation may be manufactured as the corresponding device of the prior art by simply replacing the electrolyte by the electrolyte formulation of the present invention. For example, in the case of dye-sensitized solar cells, device assembly is disclosed in numerous patent literature, for example WO 91/16719 (examples 34 and 35), but also scientific literature, for example in Barbé, C.J., Arendse, F., Comte, P., Jirousek, M., Lenzmann, F., Shklover, V., Grätzel, M. J. Am. Ceram. Soc. 1997, 80, 3157; and Wang, P., Zakeeruddin, S. M., Comte, P., Charvet, R., Humphry-Baker, R., Grätzel, M. J. Phys. Chem. B 2003, 107, 14336.

Preferably, the sensitized semi-conducting material serves as a photoanode. Preferably, the counter electrode is a cathode.

The present invention also provides a method for preparing a photoelectric cell comprising the step of bringing the electrolyte formulation of the invention in contact with a surface of a semiconductor, said surface optionally being coated with a sensitizer. Preferably, the semiconductor is selected from the materials given above, and the sensitizer is preferably selected from a dye as disclosed above.

Preferably, the electrolyte formulation may simply be poured on the semiconductor. Preferably, it is applied to the otherwise completed device already comprising a counter electrode by creating a vacuum in the internal lumen of the cell through a hole in the counter electrode and adding the electrolyte formulation as disclosed in the reference of Wang et al., J. Phys. Chem. B 2003, 107, 14336.

The present invention will now be illustrated, by way of the following examples.

### Examples:

The substances are characterised by means of Raman and NMR spectroscopy and X-Ray analysis. The NMR-spectra are measured in deuterated solvent CD₃CN by use of Bruker Avance III Spektrometer with Deuterium Lock. The resonance frequency for different nuclear are: ¹H: 400,17 MHz, ¹¹B: 128,39 MHz and ¹³C: 100,61 MHz. The following references are used: TMS for ¹H und ¹³C spectra and BF₃·Et₂O - for ¹¹B spectra.

Cyclic voltammograms are measured in the 5 ml glass cell equipped with ESA EE047 glassy carbon working electrode (internal diameter: 3 mm; electrochemically active area: 7.1 mm²), Pt counter electrode (Pt-wire, ø 0.5 mm, 57 mm long; electrochemically active area: 78.5 mm²) and RE-7 nonaqueous reference electrode Ag/Ag⁺ (0.01 M AgNO₃ in CH₃CN). All measurements are carried out in acetonitrile as solvent. Tetrabutyl ammonium hexafluorophosphate, [TBA][PF₆], with the concentration 0.1 mol/L in CH₃CN is used as supporting electrolyte. The concentration of the test substance (Co-complexes) in all measurements is 1·10⁻³ mol/L.The volume of the solution in the cell is 4 ml. Reference substance is decamethylferrocene (E° = -0.423 V). The values of oxidation/reduction potentials and E° are given comparatively to Ag/Ag⁺ (0.01 M AgNO₃ in CH₃CN) reference electrode. The following data are reported: E_{pC} (cathodic peak); E_{pA} (anodic peak); E° - standard potential for reversible redox couple Co⁺²/Co⁺³.

The potentiostat Autolab PGSTAT30 (Fa. Metrom) is used for recording of cyclic voltammograms. Scan rate is 15 mV·s⁻¹.

In the Examples below **bipy** means:

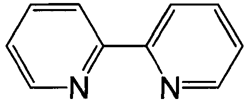

### Example 1:

### A) Synthesis of [Co(bipy)₃][BH(CN)₃]₂

2 K[BH(CN)₃] + 3 **bipy** + CoCl₂· 6H₂O → [Co(**bipy**)₃][BH(CN)₃]₂ + 2 KCI + 6H₂O

2.35 g (9.88 mmol) CoCl₂ · 6H₂O dissolved in 10 mL of water and 4.64 g (29.72 mmol) **bipy** in 25 mL of methanol are mixed together. The reaction mixture becomes immediately deep-brown. In 10 min the solution of 2.56 g (19.85 mmol) K[BH(CN)₃] in 20 mL of water is added to the reaction mixture. The product precipitates immediately as yellow solid. It is filtered off, washed with 20 mL of water and two times with 50 mL of Et₂O. The product is dried in vacuum at room temperature. The yield is 6.167 g (88%). An additional quantity of the product precipitates from the mother-solution in time.

The structure of the product, [Co(**bipy**)₃][BH(CN)₃]₂, is confirmed by X-ray analysis.

Cyclic Voltammetry:
E_{pA} = 0.070 V; E°_{Co+2/Co+3} = 0.040 V (reversible redox couple).

### B) Synthesis of [Co(bipy)₃][BH(CN)₃]₃

3 K[BH(CN)₃] + 3 **bipy** + CoCl₂· 6H₂O + Cl₂ → [Co(**bipy**)₃][BH(CN)₃]₃ + 3 KCI

1.194 g (5.018 mmol) CoCl₂ · 6H₂O dissolved in 10 mL of water are mixed together with the solution of 2.364 g (15.14 mmol) **bipy** in 16 mL of methanol. The reaction mixture becomes immediately deep-brown. In 10 min Cl₂-gas is bubbled through the reaction mixture for 20 min. The solution brightens up. The bubbling of the Chlorine is finished after the colour of the solution doesn't change any more. The residue of Cl₂ is removed under vacuum and 1.946 g (15.09 mmol) K[BH(CN)₃] dissolved in 15 mL of water are added to the reaction mixture. The yellow solid precipitates from the solution within 30 min. It is filtered off, washed with 15 mL of water and two times with 50 mL of Et₂O. The product is dried in vacuum at room temperature. The yield is 3.00 g (75%). An additional quantity of the product precipitates from the mother-solution in time.

The structure of the product, [Co(**bipy**)₃][BH(CN)₃]₃, is confirmed by the NMR-spectra.

NMR ¹¹B, δ, ppm:
[BH(CN)₃]⁻: -40.2 d, ¹J_{B,H} = 97 Hz, ¹J_{B,C} = 66 Hz;

NMR ¹H, δ, ppm:
[BH(CN)₃]⁻: 1.72 q (¹¹B), sep (¹⁰B), ¹J_{11B,H} = 98 Hz, ¹J_{10B,H} = 33 Hz;
[Co(bpy)₃]³⁺ : 7.33 d, d (6H), J_{H,H} = 5.8 Hz, J_{H,H} = 0.8 Hz; 7.79 d, d, d (6H), J_{H,H} = 7.7 Hz, J_{H,H} = 5.9 Hz, J_{H,H} = 1.5 Hz; 8.52 t, d (6H), J_{H,H} = 7.8 Hz, J_{H,H} = 1.2 Hz;
8.74 d, d (6H), J_{H,H} = 8.1 Hz, J_{H,H} = 1.2 Hz;

NMR ¹³C, δ, ppm:
[BH(CN)₃]⁻ : 128.2 q, d, ¹J_{11B,13C} = 66 Hz; ²J_{H,13C} = 12 Hz;
[Co(bpy)₃]³⁺: 128.1 d, d, J_{13C,H} = 175 Hz, J_{13C,H} = 7.9 Hz; 132.4 d, d, d, J_{13C,H} = 176 Hz, J_{13C,H} = 6.8 Hz, J_{13C,H} = 4.2 Hz; 144.7 d, d, J_{13C,H} = 177 Hz, J_{13C,H}
= 5.9 Hz; 152.4 d, d, d, J_{13C,H} = 188 Hz, J_{13C,H} = 7.3 Hz, J_{13C,H} = 4.8 Hz;
156.5 t, J_{13C,H} = 8.9 Hz.

Cyclic Voltammetry:
E_{pC} = -0.020 V; E°_{Co+3/Co+2} = 0.045 V (reversible redox couple).

### Example 2:

### A) Synthesis of [Co(bipy)₃][BH₂(CN)₂]₂

2 Na[BH₂(CN)₂] + 3 **bipy** + CoCl₂·6H₂O → [Co(**bipy**)₃][BH₂(CN)₂]₂ + 2 NaCl

2.533 g (10.65 mmol) CoCl₂ · 6H₂O dissolved in 10 mL of water are mixed together with the solution of 4.995 g (31.98 mmol) **bipy** in 16 mL of methanol. The reaction mixture becomes immediately deep-brown. In 10 min the solution of 1.910 g (21.70 mmol) Na[BH₂(CN)₂] in 8 mL of water is added to the reaction mixture. The product precipitates immediately as yellow solid. It is filtered off, washed with 20 mL of water and two times with 50 mL of Et₂O. The product is dried in vacuum at room temperature. The yield is 5.725 g (80%). An additional quantity of the product precipitates from the mother-solution in time. The structure of the product, [Co(**bipy**)₃][BH₂(CN)₂]₂, is confirmed by the NMR-spectra.

NMR ¹¹B, δ, ppm:
[BH₂(CN)₂]⁻ : -40.9 broad (210 Hz)

NMR ¹H, δ, ppm:
[BH₂(CN)₂]⁻: 1.06 broad (250 Hz);
[Co(bpy)₃]²⁺ : 14.3 br.s (17 Hz) (6H); 45.7 br.s (16 Hz) (6H); 83.0 br.s (20
Hz) (6H); 87.5 br.s (140 Hz) (6H).

NMR ¹³C, δ, ppm:
[Co(bpy)₃]²⁺: 181 d, J_{13C,H} = 168 Hz; 412 br.d (28 Hz), J_{13C,H} = 170 Hz; 595 br.d (32 Hz), J_{13C,H} = 169 Hz.

Cyclic Voltammetry:
E_{pA} = 0.070 V; E°_{Co+2/Co+3} = 0.040 V (reversible redox couple).

### B) Synthesis of [Co(bipy)₃][BH₂(CN)₂]₃

3 Na[BH₂(CN)₂] + 3 **bipy** + CoCl₂·6H₂O + Cl₂→[Co(**bipy**)₃][BH₂(CN)₂]₃ + 3 NaCl

1.333 g (5.60 mmol) CoCl₂ · 6H₂O dissolved in 10 mL of water are mixed together with the solution of 2.621 g (16.78 mmol) **bipy** in 16 mL of methanol. The reaction mixture becomes immediately deep-brown. In 10 min Cl₂-gas is bubbled through the reaction mixture for 20 min. The solution brightens up. The bubbling of the Chlorine is finished after the colour of the solution doesn't change any more. The residue of Cl₂ is removed under vacuum and 1.477 g (16.81 mmol) Na[BH₂(CN)₂] dissolved in 10 mL of water are added to the reaction mixture. The yellow solid precipitates from the solution within one day. It is filtered off, washed with 10 mL of water and two times with 50 mL of Et₂O. The product is dried in vacuum at room temperature. The yield is 3.052 g (76%). An additional quantity (0.68 g, 0.94 mmol, 17%) of the product precipitates from the mother-solution in time.

The structure of the product, [Co(**bipy**)₃][BH₂(CN)₂]₃, is confirmed by the NMR-spectra.

NMR ¹¹B, δ, ppm:
[BH₂(CN)₂]⁻: -42.0 t, ¹J_{11B,H} = 94 Hz, ¹J_{11B,13C} = 59 Hz.

NMR ¹H, δ, ppm:
[BH₂(CN)₃]⁻ : 0.96 q (¹¹B), sep (¹⁰B), ¹J_{11B,H} = 94 Hz, ¹J_{10B,H}= 32 Hz.
[Co(bpy)₃]³⁺ : 7.33 d, d (6H), J_{H,H} = 5.8 Hz, J_{H,H} = 0.8 Hz; 7.79 d, d, d (6H), J_{H,H} = 7.7 Hz, J_{H,H} = 5.9 Hz, J_{H,H} = 1.5 Hz; 8.52 t, d (6H), J_{H,H} = 7.8 Hz, J_{H,H} = 1.2 Hz; 8.74 d, d (6H), J_{H,H} = 8.1 Hz, J_{H,H} = 1.2 Hz;

NMR ¹³C, δ, ppm:
[Co(bpy)₃]³⁺: 128.1 d, d, J_{13C,H} = 175 Hz, J_{13C,H} = 7.9 Hz; 132.4 d, d, d, J_{13C,H} = 176 Hz, J_{13C,H} = 6.8 Hz, J_{13C,H} = 4.2 Hz; 144.7 d, d, J_{13C,H} = 177 Hz, J_{13C,H} = 5.9 Hz; 152.4 d, d, d, J_{13C,H} = 188 Hz, J_{13C,H}= 7.3 Hz, J_{13C,H}= 4.8 Hz; 156.5 t, J_{13C,H} = 8.9 Hz.

Cyclic Voltammetry:
Epc = -0.020 V; E°_{Co+3/Co+2} = 0.050 V (reversible redox couple).

### Example A:

A double-layer, mesoporous TiO₂ electrode is prepared as disclosed in Wang P. et al., J. Phys. Chem. B 2003, 107, 14336, in particular page 14337, in order to obtain a photoanode consisting of a double layer structure. To prepare a transparent nanoporous TiO₂ electrode, a screen printing paste containing terpineol solvent and nanoparticulate TiO₂ of anatase phase with 30 nm diameter was deposited on a transparent conductive substrate to 5 mm x 5 mm squared shape by using a screen printer. The paste was dried for 10 minutes at 120 degrees Celsius. Another screen printing paste containing TiO₂ with 400 nm diameter was then deposited on top of the nanoporous layer to prepare an opaque layer. The double layer film was then sintered at 500 degrees Celsius for an hour with the result of an underlying transparent layer (14 microns thick) and a top opaque layer (8 microns thick). After sintering, the electrode was immersed in 40 mM aqueous solution of TiCl₄ (Merck) for 30 minutes at 70 degrees Celsius and then rinsed quickly with pure water sufficiently. Thus TiCl₄-treated electrode was dried at 500 degrees Celsius for 30 minutes just before dye sensitization. The electrode was dipped into a 0.3 mM D358 dye solution of acetonitrile (Merck HPLC grade) and tert-butyl alcohol (Merck), v:v = 1:1 for 60 hours at 19 degrees Celsius. The counter electrode was prepared with thermal pyrolysis method as disclosed in the reference above. A droplet of 5 mM solution of platinic acid (Merck) was casted at 8 µl/cm² and dried on a conductive substrate. The dye sensitized solar cell was assembled by using 30 micron thick Bynel (DuPont, USA) hot-melt film to seal up by heating. The internal space was filled with each of the electrolyte formulations as described herein to produce the corresponding devices.

The dye D358 is an indoline dye. Electrolyte used here is acetonitrile solution of 200 mM Cobaltcomplex salt of formula (I) in which n is 2 as indicated in Table 1 below, 40 mM Cobaltcomplex salt of formula (I) in which n is 3 as indicated in Table 1 below, 21 mM LiBF₄ and 150 mM N-butylbenzimidazole.

In order to obtain accurate light intensity level, Air Mass 1.5 Global (AM1.5G) simulated sunlight was calibrated spectrally according to Seigo Ito et al. "Calibration of solar simulator for evaluation of dye-sensitized solar cells" Solar Energy Materials & Solar Cells 82 (2004) 421. The measurements of photocurrent-voltage curves are carried out for devices placed on a black plate chilled down to 25°C under 1 Sun illumination. A photomask of 4 mm x 4 mm is placed on top of the fabricated devices to define the light projection area. Energy conversion efficiency is generally the ratio between the useful output of an energy conversion machine and the input of light radiation, in energy terms, determined by using adjustable resistant load to optimize the electric power output.

**Table 1 summarizes the results:**

| Co^{II}/Co^{III} redox couple | J_{SC} [mAcm⁻²] | Voc [V] | FF | η [%] |
|---|---|---|---|---|
| [Co(bipy)₃][B(CN)₄]₂ /[Co(bipy)₃][B(CN)₄]_{3*} | 8.12* | 0.71* | 0.74* | 4.2* |
| [Co(bipy)₃][BH(CN)₃]₂ /[Co(bipy)₃][BH(CN)₃]_{3*} | 10.18 | 0.70 | 0.74 | 5.3 |
| [Co(bipy)₃][BH₂(CN)₂]₂ /[Co(bipy)₃][BH₂(CN)₂]_{3*} | 9.21 | 0.68 | 0.74 | 4.6 |

| | | | | |
|---|---|---|---|---|
| * not according to the invention J_{SC} = short circuit current, V_{OC} = open circuit voltage, FF = fill factor η = power conversion efficiency | | | | |

## Claims

1. Compounds of formula (I) 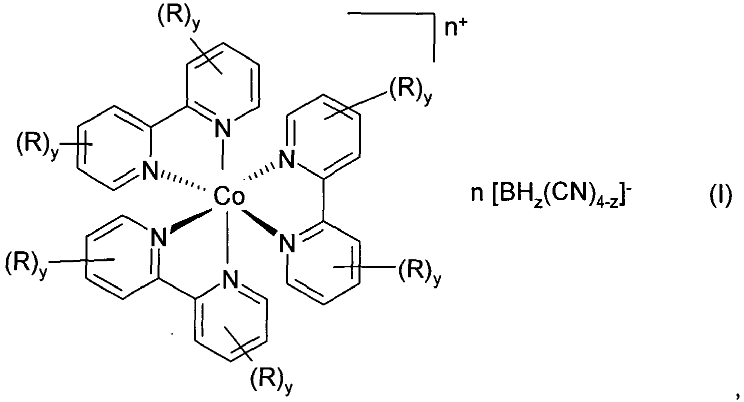 in which
z is 1 or 2,
n is 2 or 3,
y is each independently 0, 1, 2, 3 or 4,
R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
wherein two or more adjacent CH₂-groups within the substituent (CH₂)ₘ-COOR' can optionally be replaced with (-CH=CH-),
m is a number from 0 to 20 and
R' is H or a straight-chain or branched alkyl group with 1 to 20 C atoms, a straight-chain or branched alkenyl group with 2 to 20 C atoms or a straight-chain or branched alkynyl group with 2 to 20 C atoms.

2. Compounds according to claim 1, wherein R is each independently a straight-chain or branched alkyl group with 1 to 20 C atoms or (CH₂)ₘ-COOR', wherein two or more adjacent CH₂-groups within the substituent (CH₂)ₘ-COOR' can optionally be replaced with (-CH=CH-).

3. Compounds according to claim 1 or 2, wherein y is 0 or 1.

4. Process for the preparation of a compound of formula (I) in which n is 2 according to one or more of claims 1 to 3 comprising the reaction of a compound of formula (II)
Kt [BH_{z}(CN)_{4-z}] (II),
in which
z is 1 or 2 and
Kt is an alkali metal cation
with Cobalt dichloride or a hydrate thereof and with at least three equivalents of bipyridine of formula (III) 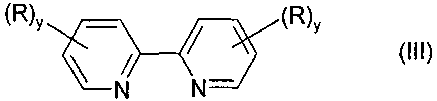 in which
y is each independently 0, 1, 2, 3 or 4,
R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
wherein two or more adjacent CH₂-groups within the substituent (CH₂)ₘ-COOR' can optionally be replaced with (-CH=CH-),
m is a number from 0 to 20 and
R' is H or a straight-chain or branched alkyl group with 1 to 20 C atoms, a straight-chain or branched alkenyl group with 2 to 20 C atoms or a straight-chain or branched alkynyl group with 2 to 20 C atoms.

5. Process for the preparation of a compound of formula (I) in which n is 3 according to one or more of claims 1 to 3 comprising the reaction of a compound of formula (II)
Kt [BH_{z}(CN)_{4-z}] (II),
in which
z is 1 or 2 and
Kt is an alkali metal cation
with Cobalt dichloride or a hydrate thereof and with at least three equivalents of bipyridine of formula (III) 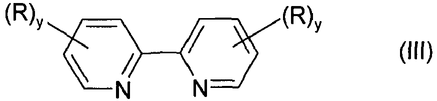 in which
y is each independently 0, 1, 2, 3 or 4,
R is each independently halogen, CN, CF₃, OR', (CH₂)ₘ-COOR', a straight-chain or branched alkyl group with 1 to 20 C atoms, a straight-chain or branched alkenyl group with 2 to 20 C atoms or a straight-chain or branched alkynyl group with 2 to 20 C atoms,
wherein two or more adjacent CH₂-groups within the substituent (CH₂)ₘ-COOR' can optionally be replaced with (-CH=CH-),
m is a number from 0 to 20 and
R' is H or a straight-chain or branched alkyl group with 1 to 20 C atoms, a straight-chain or branched alkenyl group with 2 to 20 C atoms or a straight-chain or branched alkynyl group with 2 to 20 C atoms, in the presence of an oxidant.

6. An electroyte formulation comprising at least one compound of formula (I) according to one or more of claims 1 to 3.

7. The electrolyte formulation according to claim 6 comprising the at least one compound of formula (I) in concentrations from 0.01 M to 0.5 M, preferably from 0.05 M to 0.3 M.

8. An electrochemical and/or optoelectronic device comprising a first and a second electrode and, between said first and second electrode, a charge transport layer comprising at least one compound of formula (I) according to one or more of claims 1 to 3.

9. An electrochemical and/or optoelectronic device comprising a first and a second electrode and, between said first and second electrode, a charge transport layer comprising at least one Co^{II}/Co^{III}-redox couple of formula (I), wherein y, R, m and R' are identical or different and are defined according to one or more of claims 1 to 3.

10. The device according to claim 8 or 9 which is a photoelectric conversion device, preferably a dye-sensitized solar cell or a solid state dye-sensitized solar cell.

11. The device according to one or more of claims 8 to 10, wherein said charge transport layer comprises an organic solvent and/or comprises one or more ionic liquids.

12. The device according to one or more of claims 8 to 11, wherein the at least one compound of formula (I) according to one ore more of claims 1 to 3 is contained in the electrolytic solution.

13. Use of compounds of formula (I) according to one or more of claims 1 to 3 in which n is 3 as p-type dopants for triarylamine-based hole conductors.

14. A method of preparing an electrochemical device according to one or more of claims 8 to 12, the method comprising the steps of:
- providing a first and a second electrode;
- providing a charge transport layer,
- adding to said charge transport layer at least one compound of formula (I) according to one or more of claims 1 to 3.

15. A method of preparing an electrochemical device according to one or more of claims 9 to 12, the method comprising the steps of:
- providing a first and a second electrode;
- providing a charge transport layer,
adding to said charge transport layer at least one Co^{II}/Co^{III}-redox couple of formula (I), wherein y, R, m and R' are identical or different and are defined according to one or more of claims 1 to 3.

## Patentansprüche

1. Verbindungen der Formel (I) 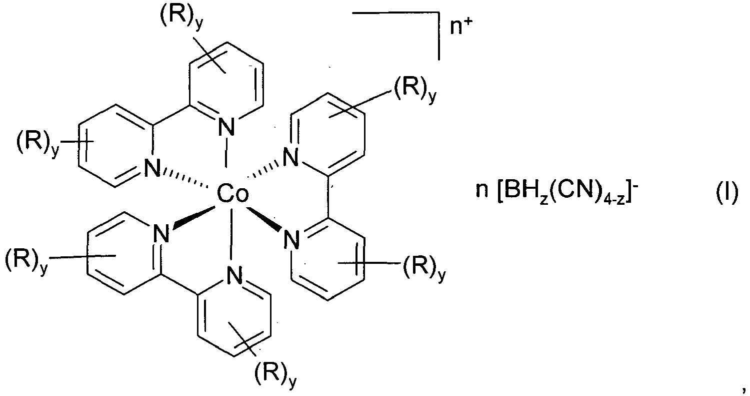 in der
z für 1 oder 2 steht,
n für 2 oder 3 steht,
y jeweils unabhängig für 0, 1, 2, 3 oder 4 steht,
R jeweils unabhängig Halogen, CN, CF₃, OR', (CH₂)ₘ-COOR', eine geradkettige oder verzweigte Alkylgruppe mit 1 bis 20 C-Atomen, eine geradkettige oder verzweigte Alkenylgruppe mit 2 bis 20 C-Atomen oder eine geradkettige oder verzweigte Alkinylgruppe mit 2 bis 20 C-Atomen bedeutet,
wobei zwei oder mehr benachbarte CH₂-Gruppen innerhalb des Substituenten (CH₂)ₘ-COOR' gegebenenfalls mit (-CH=CH-) ersetzt sein können,
m für eine Zahl von 0 bis 20 steht und
R' H oder eine geradkettige oder verzweigte Alkylgruppe mit 1 bis 20 C-Atomen, eine geradkettige oder verzweigte Alkenylgruppe mit 2 bis 20 C-Atomen oder eine geradkettige oder verzweigte Alkinylgruppe mit 2 bis 20 C-Atomen bedeutet.

2. Verbindungen nach Anspruch 1, wobei R jeweils unabhängig eine geradkettige oder verzweigte Alkylgruppe mit 1 bis 20 C-Atomen oder (CH₂)ₘ-COOR' bedeutet, wobei zwei oder mehr benachbarte CH₂-Gruppen innerhalb des Substituenten (CH₂)ₘ-COOR' gegebenenfalls mit (-CH=CH-) ersetzt sein können.

3. Verbindungen nach Anspruch 1 oder 2, wobei y für 0 oder 1 steht.

4. Verfahren zur Herstellung einer Verbindung der Formel (I), in der n für 2 steht, nach einem oder mehreren der Ansprüche 1 bis 3, umfassend die Umsetzung einer Verbindung der Formel (II)
Kt[BH_{z}(CN)_{4-z}] (II),
in der
z für 1 oder 2 steht und
Kt ein Alkalimetallkation bedeutet,
mit Cobaltdichlorid oder einem Hydrat davon und mit mindestens drei Äquivalenten Bipyridin der Formel (III) 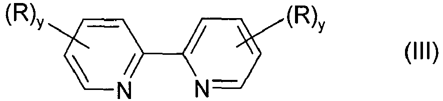 in der
y jeweils unabhängig für 0, 1, 2, 3 oder 4 steht,
R jeweils unabhängig Halogen, CN, CF₃, OR', (CH₂)ₘ-COOR', eine geradkettige oder verzweigte Alkylgruppe mit 1 bis 20 C-Atomen, eine geradkettige oder verzweigte Alkenylgruppe mit 2 bis 20 C-Atomen oder eine geradkettige oder verzweigte Alkinylgruppe mit 2 bis 20 C-Atomen bedeutet,
wobei zwei oder mehr benachbarte CH₂-Gruppen innerhalb des Substituenten (CH₂)ₘ-COOR' gegebenenfalls mit (-CH=CH-) ersetzt sein können,
m für eine Zahl von 0 bis 20 steht und
R' H oder eine geradkettige oder verzweigte Alkylgruppe mit 1 bis 20 C-Atomen, eine geradkettige oder verzweigte Alkenylgruppe mit 2 bis 20 C-Atomen oder eine geradkettige oder verzweigte Alkinylgruppe mit 2 bis 20 C-Atomen bedeutet.

5. Verfahren zur Herstellung einer Verbindung der Formel (I), in der n für 3 steht, nach einem oder mehreren der Ansprüche 1 bis 3, umfassend die Umsetzung einer Verbindung der Formel (II)
Kt[BH_{z}(CN)_{4-z}] (II),
in der
z für 1 oder 2 steht und
Kt ein Alkalimetallkation bedeutet,
mit Cobaltdichlorid oder einem Hydrat davon und mit mindestens drei Äquivalenten Bipyridin der Formel (III) 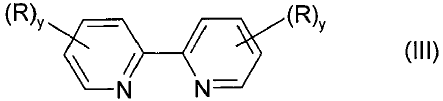 in which
y jeweils unabhängig für 0, 1, 2, 3 oder 4 steht,
R jeweils unabhängig Halogen, CN, CF₃, OR', (CH₂)ₘ-COOR', eine geradkettige oder verzweigte Alkylgruppe mit 1 bis 20 C-Atomen, eine geradkettige oder verzweigte Alkenylgruppe mit 2 bis 20 C-Atomen oder eine geradkettige oder verzweigte Alkinylgruppe mit 2 bis 20 C-Atomen bedeutet,
wobei zwei oder mehr benachbarte CH₂-Gruppen innerhalb des Substituenten (CH₂)ₘ-COOR' gegebenenfalls mit (-CH=CH-) ersetzt sein können,
m für eine Zahl von 0 bis 20 steht und
R' H oder eine geradkettige oder verzweigte Alkylgruppe mit 1 bis 20 C-Atomen, eine geradkettige oder verzweigte Alkenylgruppe mit 2 bis 20 C-Atomen oder eine geradkettige oder verzweigte Alkinylgruppe mit 2 bis 20 C-Atomen bedeutet, in Anwesenheit eines Oxidationsmittels.

6. Elektrolytformulierung enthaltend mindestens eine Verbindung der Formel (I) nach einem oder mehreren der Ansprüche 1 bis 3.

7. Elektrolytformulierung nach Anspruch 6 enthaltend die mindestens eine Verbindung der Formel (I) in Konzentrationen von 0,01 M bis 0,5 M, vorzugsweise von 0,05 M bis 0,3 M.

8. Elektrochemische und/oder optoelektronische Vorrichtung enthaltend eine erste und eine zweite Elektrode und, zwischen der ersten und zweiten Elektrode, eine Ladungstransportschicht enthaltend mindestens eine Verbindung der Formel (I) nach einem oder mehreren der Ansprüche 1 bis 3.

9. Elektrochemische und/oder optoelektronische Vorrichtung enthaltend eine erste und eine zweite Elektrode und, zwischen der ersten und zweiten Elektrode, eine Ladungstransportschicht enthaltend mindestens ein Co^{II}/Co^{III}-Redoxpaar der Formel (I), wobei y, R, m und R' gleich oder verschieden sind und nach einem oder mehreren der Ansprüche 1 bis 3 definiert sind.

10. Vorrichtung nach Anspruch 8 oder 9, bei der es sich um eine photoelektrische Umwandlungsvorrichtung, vorzugsweise eine Farbstoffsolarzelle oder eine Festkörper-Farbstoffsolarzelle handelt.

11. Vorrichtung nach einem oder mehreren der Ansprüche 8 bis 10, wobei die Ladungstransportschicht ein organisches Lösungsmittel enthält und/oder eine oder mehrere ionische Flüssigkeiten enthält.

12. Vorrichtung nach einem oder mehreren der Ansprüche 8 bis 11, wobei die mindestens eine Verbindung der Formel (I) nach einem oder mehreren der Ansprüche 1 bis 3 in der Elektrolytlösung enthalten ist.

13. Verwendung von Verbindungen der Formel (I) nach einem oder mehreren der Ansprüche 1 bis 3, in denen n für 3 steht, als Dotierstoffe des p-Typs für Triarylamin-basierte Lochleiter.

14. Verfahren zur Herstellung einer elektrochemischen Vorrichtung nach einem oder mehreren der Ansprüche 8 bis 12, wobei das Verfahren die folgenden Schritte umfasst:
- Bereitstellen einer ersten und einer zweiten Elektrode;
- Bereitstellen einer Ladungstransportschicht,
- Hinzufügen mindestens einer Verbindung der Formel (I) nach einem oder mehreren der Ansprüche 1 bis 3 zu der Ladungstransportschicht.

15. Verfahren zur Herstellung einer elektrochemischen Vorrichtung nach einem oder mehreren der Ansprüche 9 bis 12, wobei das Verfahren die folgenden Schritte umfasst:
- Bereitstellen einer ersten und einer zweiten Elektrode;
- Bereitstellen einer Ladungstransportschicht,
Hinzufügen mindestens eines Co^{II}/Co^{III}-Redoxpaares der Formel (I), wobei y, R, m und R' gleich oder verschieden sind und nach einem oder mehreren der Ansprüche 1 bis 3 definiert sind, zu der Ladungstransportschicht.

## Revendications

1. Composés de la formule (I) : 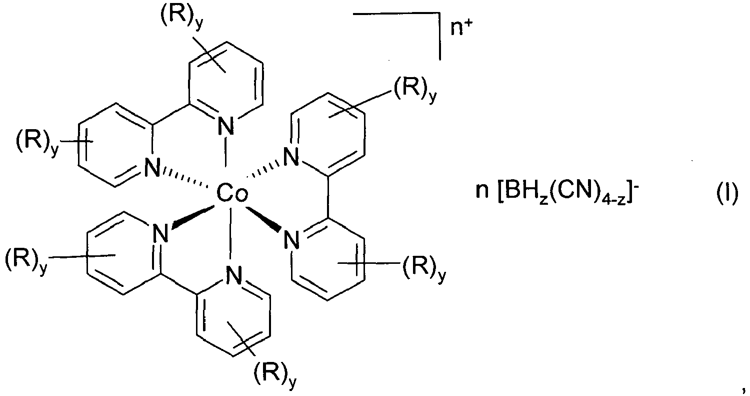 dans laquelle :
z est 1 ou 2,
n est 2 ou 3,
y est, chacun de manière indépendante, 0, 1, 2, 3 ou 4,
R est, chacun de manière indépendante, halogène, CN, CF₃, OR', (CH₂)ₘ-COOR', un groupe alkyle en chaîne droite ou ramifié avec 1 à 20 atome(s) de C, un groupe alkényle en chaîne droite ou ramifié avec 2 à 20 atomes de C ou un groupe alkynyle en chaîne droite ou ramifié avec 2 à 20 atomes de C,
où deux groupes CH₂ adjacents ou plus à l'intérieur du substituant (CH₂)ₘ-COOR' peuvent en option être remplacés par (-CH=CH-),
m est un nombre de 0 à 20 et
R' est H ou un groupe alkyle en chaîne droite ou ramifié avec 1 à 20 atome(s) de C, un groupe alkényle en chaîne droite ou ramifié avec 2 à 20 atomes de C ou un groupe alkynyle en chaîne droite ou ramifié avec 2 à 20 atomes de C.

2. Composés selon la revendication 1, dans lesquels R est, chacun de manière indépendante, un groupe alkyle en chaîne droite ou ramifié avec 1 à 20 atome(s) de C ou (CH₂)ₘ-COOR', où deux groupes CH₂ adjacents ou plus à l'intérieur du substituant (CH₂)ₘ-COOR' peuvent en option être remplacés par (-CH=CH-).

3. Composés selon la revendication 1 ou 2, dans lesquels y est 0 ou 1.

4. Procédé pour la préparation d'un composé de la formule (I) dans laquelle n est 2 selon une ou plusieurs des revendications 1 à 3, comprenant la réaction d'un composé de la formule (II) :
Kt[BH_{z}(CN)_{4-z}] (II)
dans laquelle :
z est 1 ou 2 et
Kt est un cation de métal alcalin
avec du dichlorure de cobalt ou son hydrate et avec au moins trois équivalents de bipyridine de la formule (III) : 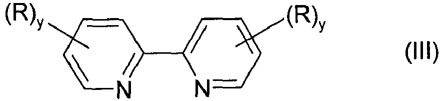 dans laquelle :
y est, chacun de manière indépendante, 0, 1, 2, 3 ou 4,
R est, chacun de manière indépendante, halogène, CN, CF₃, OR', (CH₂)ₘ-COOR', un groupe alkyle en chaîne droite ou ramifié avec 1 à 20 atome(s) de C, un groupe alkényle en chaîne droite ou ramifié avec 2 à 20 atomes de C ou un groupe alkynyle en chaîne droite ou ramifié avec 2 à 20 atomes de C,
où deux groupes CH₂ adjacents ou plus dans le substituant (CH₂)ₘ-COOR' peuvent en option être remplacés par (-CH=CH-),
m est un nombre de 0 à 20 et
R' est H ou un groupe alkyle en chaîne droite ou ramifié avec 1 à 20 atome(s) de C, un groupe alkényle en chaîne droite ou ramifié avec 2 à 20 atomes de C ou un groupe alkynyle en chaîne droite ou ramifié avec 2 à 20 atomes de C.

5. Procédé pour la préparation d'un composé de la formule (I) dans laquelle n est 3 selon une ou plusieurs des revendications 1 à 3, comprenant la réaction d'un composé de la formule (II) :
Kt[BH_{z}(CN)_{4-z}] (II)
dans laquelle :
z est 1 ou 2 et
Kt est un cation de métal alcalin
avec du dichlorure de cobalt ou son hydrate et avec au moins trois équivalents de bipyridine de la formule (III) : 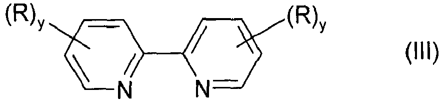 dans laquelle :
y est, chacun de manière indépendante, 0, 1, 2, 3 ou 4,
R est, chacun de manière indépendante, halogène, CN, CF₃, OR', (CH₂)ₘ-COOR', un groupe alkyle en chaîne droite ou ramifié avec 1 à 20 atome(s) de C, un groupe alkényle en chaîne droite ou ramifié avec 2 à 20 atomes de C ou un groupe alkynyle en chaîne droite ou ramifié avec 2 à 20 atomes de C,
où deux groupes CH₂ adjacents ou plus à l'intérieur du substituant (CH₂)ₘ-COOR' peuvent en option être remplacés par (-CH=CH-),
m est un nombre de 0 à 20 et
R' est H ou un groupe alkyle en chaîne droite ou ramifié avec 1 à 20 atome(s) de C, un groupe alkényle en chaîne droite ou ramifié avec 2 à 20 atomes de C ou un groupe alkynyle en chaîne droite ou ramifié avec 2 à 20 atomes de C, en présence d'un oxydant.

6. Formulation d'électrolyte comprenant au moins un composé de la formule (I) selon une ou plusieurs des revendications 1 à 3.

7. Formulation d'électrolyte selon la revendication 6 comprenant l'au moins un composé de la formule (I) selon des concentrations de 0,01 M à 0,5 M, de façon préférable de 0,05 M à 0,3 M.

8. Dispositif électrochimique et/ou optoélectronique comprenant des première et seconde électrodes et, entre lesdites première et seconde électrodes, une couche de transport de charges comprenant au moins un composé de la formule (I) selon une ou plusieurs des revendications 1 à 3.

9. Dispositif électrochimique et/ou optoélectronique comprenant des première et seconde électrodes et, entre lesdites première et seconde électrodes, une couche de transport de charges comprenant au moins un couple redox Co^{II}/Co^{III} de la formule (I), dans laquelle y, R, m et R' sont identiques ou différents et sont définis selon une ou plusieurs des revendications 1 à 3.

10. Dispositif selon la revendication 8 ou 9, lequel est un dispositif de conversion photoélectrique, de façon préférable une cellule solaire sensibilisée par colorant ou une cellule solaire sensibilisée par colorant à l'état solide.

11. Dispositif selon une ou plusieurs des revendications 8 à 10, dans lequel ladite couche de transport de charges comprend un solvant organique et/ou comprend un ou plusieurs liquide(s) ionique(s).

12. Dispositif selon une ou plusieurs des revendications 8 à 11, dans lequel l'au moins un composé de la formule (I) selon une ou plusieurs des revendications 1 à 3 est contenu dans la solution électrolytique.

13. Utilisation de composés de la formule (I) selon une ou plusieurs des revendications 1 à 3, dans laquelle n vaut 3, en tant que dopants de type p pour des conducteurs de trous à base de triarylamine.

14. Procédé de préparation d'un dispositif électrochimique selon une ou plusieurs des revendications 8 à 12, le procédé comprenant les étapes de:
- formation de première et seconde électrodes,
- formation d'une couche de transport de charges, et
- ajout, à ladite couche de transport de charges, d'au moins un composé de la formule (I) selon une ou plusieurs des revendications 1 à 3.

15. Procédé de préparation d'un dispositif électrochimique selon une ou plusieurs des revendications 9 à 12, le procédé comprenant les étapes de:
- formation de première et seconde électrodes,
- formation d'une couche de transport de charges, et
ajout, à ladite couche de transport de charges, d'au moins un couple redox Co^{II}/Co^{III} de la formule (1), dans laquelle y, R, m et R' sont identiques ou différents et sont définis selon une ou plusieurs des revendications 1 à 3.
